# EUROPEAN PATENT SPECIFICATION

(11) **EP 3 890 948 B1**
(45) Date of publication and mention of the grant of the patent: **18.10.2023**
(21) Application number: 19820859.7
(22) Date of filing: 05.12.2019
(51) Int. Cl.: B29C 64/165, B33Y 10/00, B33Y 30/00

(54) **METHODS AND APPARATUS FOR THE MANUFACTURE OF THREE-DIMENSIONAL OBJECTS**
VERFAHREN UND VORRICHTUNG ZUR HERSTELLUNG VON DREIDIMENSIONALEN OBJEKTEN
PROCÉDÉS ET APPAREIL POUR LA FABRICATION D'OBJETS TRIDIMENSIONNELS

(30) Priority: 07.12.2018 GB 201820016
(43) Date of publication of application: 13.10.2021
(73) Proprietor: Stratasys Powder Production Ltd, London SW1H 0BL (GB)
(72) Inventor: TJELLESEN, Frederik, London SW1H 0BL (GB); HARTMANN, Anders, London SW1H 0BL (GB); LANGE, Torben, London SW1H 0BL (GB); ELLIS, Adam, London SW1H 0BL (GB); CALEY, Michael, London SW1H 0BL (GB); NOBLE, Christopher, London SW1H 0BL (GB); MORSE, Andrew, London SW1H 0BL (GB)
(74) Representative: Pitchford, James Edward
(86) International application number: PCT/GB2019/053442
(87) International publication number: WO 2020/115492

(56) References cited:
- JP-A- 2018 154 882
- US-A1- 2012 156 516
- US-A1- 2017 355 137
- US-A1- 2017 368 748
- US-A1- 2018 036 947
- US-A1- 2018 333 913
- US-B2- 9 944 020

## Description

### FIELD OF INVENTION

The present disclosure relates to apparatus and methods for the layer-by-layer formation of three-dimensional (3D) objects. More particularly, the disclosure relates to apparatus and methods for use in powder-based manufacturing of three-dimensional objects.

### BACKGROUND

Apparatus for the manufacture of three-dimensional objects on a layer-by-layer basis from powder, and various powder-based methods for manufacturing, such as selective laser sintering and high speed sintering, are known. These powder-based methods comprise a series of steps, including distributing a layer of powder, preheating that layer of powder, and sintering the powder in accordance with image data for that layer of the three-dimensional object to be built. Another layer of powder is then distributed and the series of steps is repeated until the desired three-dimensional object is generated.

The build time to generate a three-dimensional object depends on a size of the object and a layer thickness or a resolution of the object. It may take from several minutes to several hours. There is a trade-off between the resolution of the three-dimensional object and a required build time. To increase the yield and to maximise the throughput of the apparatus for manufacturing three-dimensional objects, it is desirable to reduce the build time without compromising the resolution or quality of the three-dimensional object.

Background art is provided in US 2017/368748 A1 and US 2018/036947 A1.

US 2017/368748 A1 discloses an apparatus for generating three dimensional objects which comprises a first scanning carriage. The first scanning carriage comprises a first energy source to pre-heat an area of a build surface as the first scanning carriage moves over the build surface.

US 2018/036947 A1 discloses a system for generating a three-dimensional object. The system comprises a carriage to move bi-directionally along a first axis relative to a support platform. The carriage is to receive, or have installed thereon, a plurality of modules each to perform an operation from a set of operations to generate a layer of a three-dimensional object. The system further comprises a controller to cause relative movement between the carriage and the support platform along the first axis, and to control, during the relative movement, operation of the modules to perform the set of operations in a predefined order.

### SUMMARY

The present disclosure provides an improved apparatus and methods to manufacture a three-dimensional object. More particularly, the present invention is set out in the appended independent claims. Details of certain embodiments are set out in the appended dependent claims.

According to a first aspect of the present disclosure, there is provided apparatus for manufacturing a three-dimensional object from a powder, the apparatus comprising: a work surface; a build bed having a build area, the build area being comprised within the work surface, wherein successive layers of said three-dimensional object are formed in the build bed; a first powder supply module fixedly arranged on a first side of the work surface, outward from a first side of the build bed; a second powder supply module fixedly arranged on a second side of the work surface, outward from a second side of the build bed; a first powder distribution sled operable to distribute powder dosed to the work surface from the first powder supply module while moving in a first direction from the first side of the work surface towards the second side of the work surface, and from the second powder supply module while moving in a second direction from the second side of the work surface towards the first side of the work surface, so as to form a layer of powder within the build area, the first powder distribution sled being driveable along a first axis across the build area; and a print sled operable to deposit a pattern of fluid onto the layer of powder within the build area to define the cross section of said object in said layer, the print sled being driveable along a second axis across the build area; wherein the first powder distribution sled comprises a first powder distribution device for distributing the powder; wherein the print sled comprises one or more droplet deposition heads for depositing the fluid, a first radiation source assembly located on one side of the one or more droplet deposition heads, and a second radiation source assembly located on the other side of the one or more droplet deposition heads; and wherein the first powder distribution sled further comprises a third radiation source assembly.

According to a second aspect of the present disclosure, there is provided a method of manufacturing a three-dimensional object from a powder, using apparatus according to the first aspect to form each layer of said object.

According to a third aspect of the present disclosure, there is provided apparatus for manufacturing a three-dimensional object from a powder, the apparatus comprising: a work surface; a build bed having a build area, the build area being comprised within the work surface, wherein successive layers of said three-dimensional object are formed in the build bed; a first powder supply module fixedly arranged on a first side of the work surface, outward from a first side of the build bed; a second powder supply module fixedly arranged on a second side of the work surface, outward from a second side of the build bed; a first powder distribution sled operable to distribute powder dosed to the work surface from the first powder supply module while moving in a first direction from the first side of the work surface towards the second side of the work surface, and from the second powder supply module while moving in a second direction from the second side of the work surface towards the first side of the work surface, so as to form a layer of powder within the build area, the powder distribution sled being driveable along a first axis across the build area; and a first print sled operable to deposit a pattern of fluid onto the layer of powder within the build area to define the cross section of said object in said layer, the first print sled being driveable along a second axis across the build area; wherein the first axis is parallel to, or coaxial with, the second axis; wherein the first powder distribution sled comprises a first powder distribution device, a first radiation source assembly and a second radiation source assembly; wherein the first print sled comprises one or more droplet deposition heads and a third radiation source assembly located on one side of the one or more droplet deposition heads, in a first direction relative to the one or more droplet deposition heads; and wherein the first print sled is positioned in a second direction, opposite to the first direction, relative to the powder distribution sled.

According to a fourth aspect of the present disclosure, there is provided a method of manufacturing a three-dimensional object from a powder, using apparatus according to the third aspect to form each layer of said object.

### BRIEF DESCRIPTION OF THE DRAWINGS

Embodiments will now be described by way of non-limiting examples, with reference to the accompanying Figures of which:
Figure 1 schematically illustrates a cross-sectional front view of an apparatus for the manufacture of three-dimensional objects, incorporating two powder supply modules, one on each side of a build bed;
Figure 2A schematically illustrates, as a cut-through of components of the apparatus of Figure 1, a double powder supply arrangement according to one embodiment;
Figure 2B schematically illustrates a variant of the apparatus of Figure 2A, having a different configuration of dosing blades;
Figure 3A schematically illustrates, as a cut-through of components of the apparatus of Figure 1, a double powder supply arrangement according to another embodiment;
Figure 3B schematically illustrates a variant of the apparatus of Figure 3A;
Figure 4A schematically illustrates, as a cut-through of components of the apparatus of Figure 1, a double powder supply arrangement according to another embodiment;
Figure 4B schematically illustrates a variant of the apparatus of Figure 4A;
Figure 5 schematically illustrates an arrangement of a powder distribution sled and a print sled according to a first sled layout "A" (viewed from below);
Figure 6 schematically illustrates a flow diagram of a method using the first sled layout "A";
Figure 7 schematically illustrates an arrangement of a powder distribution sled and two print sleds according to the first sled layout "A" (viewed from below);
Figure 8 schematically illustrates a flow diagram of a method using the sled layout illustrated in Figure 7;
Figure 9 schematically illustrates an arrangement of a powder distribution sled and a print sled according to a second sled layout "B" (viewed from below);
Figure 10 schematically illustrates a flow diagram of a method using the second sled layout "B";
Figure 11 schematically illustrates arrangements of a powder distribution sled and two print sleds according to the second sled layout "B" (viewed from below);
Figure 12 schematically illustrates a flow diagram of a method using the sled layout illustrated in Figure 11; and
Figure 13 schematically illustrates an arrangement of a powder distribution sled and two print sleds according to a variant of the second sled layout "B" (viewed from below).

In the figures, like elements are indicated by like reference numerals throughout.

### DETAILED DESCRIPTION

The present disclosure provides double powder supply arrangements and various sled layouts to reduce the process time per layer of the build, thus reducing the build time required to manufacture three-dimensional objects.

Reference will now be made in detail to the embodiments, examples of which are illustrated in the accompanying drawings. In the following detailed description numerous specific details are set forth by way of examples in order to provide a thorough understanding of the relevant teachings. However, it will be apparent to one of ordinary skill in the art that the present teachings may be practiced without these specific details.

### Apparatus overview

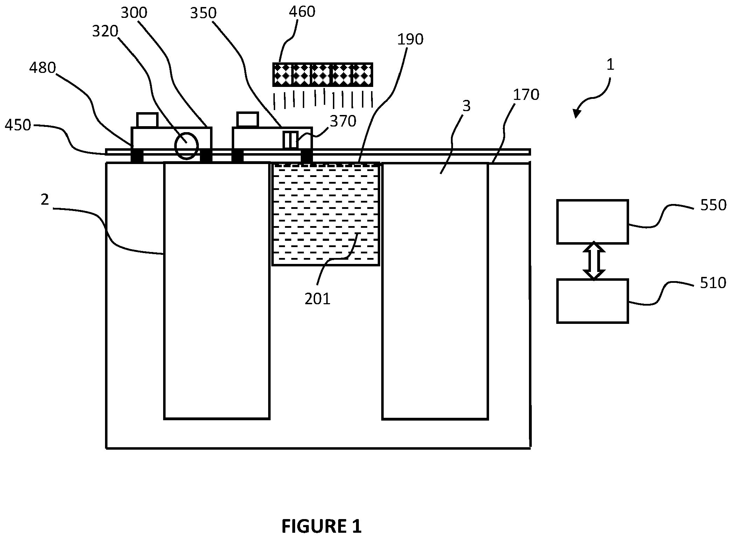

Figure 1 schematically illustrates a front view of an apparatus 1 for the manufacture of three-dimensional objects. The apparatus 1 is operable to fabricate three-dimensional objects from a powder, and includes first and second fixedly-arranged powder supply modules 2, 3 for storing the powder, a work surface 170 comprising a build area 190 provided at the top of a build bed 201 which is within a build chamber 200 wherein successive layers of the three-dimensional object are formed, a powder distribution sled 300 operable to distribute a layer of powder within the build area 190, a print sled 350 operable to deposit (by means of one or more droplet deposition heads) a fluid pattern to define the cross-section of the three-dimensional object to be manufactured in that layer of powder, and radiation source assemblies (discussed in detail below; not shown in Figure 1) to preheat and sinter the powder to form the corresponding layer of the object.

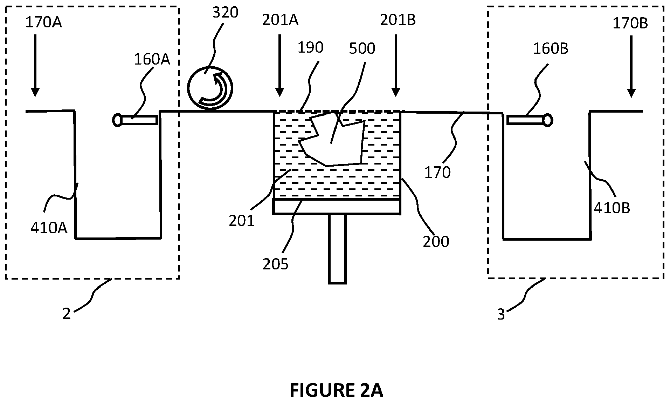

With reference briefly to Figure 2A, the first powder supply module 2 is fixedly positioned on a first side 170A of the work surface 170, outward from a respective first side 201A of the build bed 201. The second powder supply module 3 is fixedly positioned on a second side 170B of the work surface 170, outward from a respective second side 201B of the build bed 201. As illustrated, the second side 201B of the build bed may be opposite to the first side 201A of the build bed, and the second side 170B of the work surface may be opposite to the first side 170A of the work surface.

The powder may be, or may comprise, a thermoplastic polymeric material such as PA11, PA12, PA6, polypropylene (PP), polyurethane or other polymers. Some metals or ceramics may also be compatible with the apparatus dependent on the sintering temperature achievable by the radiation source assembly of the apparatus, and whether the metal or ceramic powder does not absorb certain wavelengths which may be used for preheating. The examples of "powder" material are not limited to these and any material known in the art that may be utilized to build the three dimensional object, may be used.

The fluid may be a liquid such as a radiation absorbing material (RAM) or a fluid powder comprising a radiation absorbing material. Moreover, the fluid may be a sinter-promoting fluid, a non-sinter-promoting fluid, or a fluid that may inhibit the sintering and may thereby enhance the edge definition of the object.

The expression "radiation source assembly" in this disclosure should be interpreted broadly, to not only encompass a single radiation source such as a lamp, but also to encompass an assembly of multiple radiation sources (e.g. a plurality of lamps). In the latter case, each of the radiation sources may have a different radiation intensity and may be selectively activated by a controller.

Turning back to Figure 1, the apparatus 1 comprises a powder distribution sled 300 and a print sled 350 arranged on bearings 480 on rails 450. The rails 450 suspend the sleds 300, 350 above the work surface 170 of the apparatus 1. An overhead radiation source assembly 460, such as a ceramic heater, may be provided above the build area 190.

The apparatus 1 further comprises a first powder supply module 2 and a second powder supply module 3 for storing the powder. The powder may be delivered to the first powder supply module 2 and/or to the second powder supply module 3 from an external tank (not shown) or hopper or container, as required. According to one embodiment, fresh "virgin" powder is conveyed to the first powder supply module 2 and/or and to the second powder supply module 3. Fresh "virgin" powder is considered to be a powder which has not be used in the apparatus 1 previously.

A dosing blade may be provided at or near the top surface of each powder supply module. When the dosing blade is rotated through 180 degrees, it pushes powder which has accumulated near the top of the powder supply module onto the work surface 170 to form a pile of powder on the work surface 170 in the vicinity of the dosing blade. Alternatively, a pile of powder may be partially formed on the work surface 170 and partially on the dosing blade.

The powder is then spread across the work surface 170 by a powder distribution device 320, which is mounted on the powder distribution sled 300. For any of the below-described powder distribution sleds, the powder distribution device 320 for spreading the powder across the build area 190 can take the form of any known spreading device, for example, a blade, a roller (which may be a counter-rotating roller), a spreader, a levelling device, a coating unit or a compacting device.

The powder distribution device 320 distributes the powder across the work surface 170, covering the build area 190 in a layer of powder. The thickness of the layer of powder is determined by the distance by which the build chamber floor (205 in Figure 2A), and thus the surface of the build area 190, is lowered following the deposition of the fluid and sintering of those parts of the layer where the fluid has been deposited. The thickness of the layer may depend on the type of object to be built and/or may depend on the required resolution of the object. The thickness of the layer may range from 50 µm to 1000 µm or sometimes greater than 1000 µm.

### Embodiments of double powder supply arrangements

Double powder supply arrangements according to various embodiments will now be described in detail.

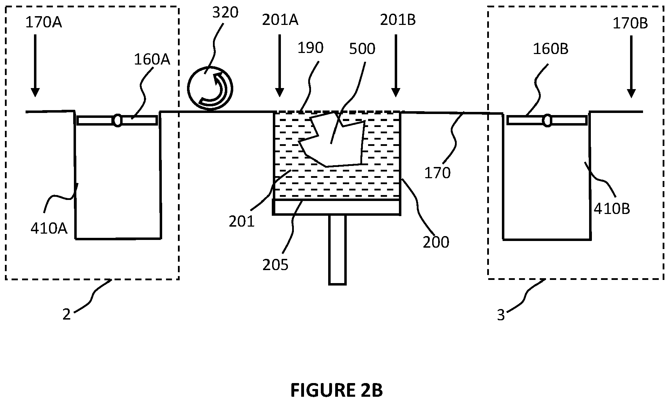

### Embodiment 1 (Figures 2A, 2B)

According to one embodiment, a powder supply arrangement of apparatus 1 is as illustrated in Figure 2A, as a cut-through of components of the apparatus of Figure 1. The apparatus 1 comprises a first powder supply module 2 comprising a first powder container 410A, and a second powder supply module 3 comprising a second powder container 410B respectively. The first powder supply module 2 is fixedly arranged on the first side 170A of the work surface 170, outward from the first side 201A of the build bed 201, and the second powder supply module 3 is fixedly arranged on the second side 170B of the work surface 170, outward from the second side 201B of the build bed 201. The first and second powder supply modules 2, 3 may have similar or different features. In the illustrated embodiment, a first dosing blade 160A and a second dosing blade 160B are provided at or near the top of the first powder container 410A and the second powder container 410B respectively. The first and second dosing blades 160A, 160B are each operable to rotate about an axis of rotation, which is the axis extending along the length direction of the first and second powder containers 410A, 410B, i.e. into the page in Figure 2A.

When the first and/or the second dosing blade 160A, 160B is rotated through 180 degrees, it pushes powder which has accumulated near the top of the first and/or second powder container 410A, 410B onto the work surface 170, to form a pile of powder on the work surface 170 in the vicinity of the dosing blade. Alternatively, a pile of powder may partially be formed on the work surface 170 and partially on the dosing blade.

The powder distribution device 320 is operable to distribute the powder dosed to the work surface 170 from the first powder container 410A across the build area 190 while moving in a first direction (e.g. left to right, "L-R", as illustrated) from the first side 170A of the work surface 170 towards the second side 170B of the work surface 170. Conversely, when the powder distribution device 320 travels in a second direction (e.g. right to left, "R-L", as illustrated) from the second side 170B of the work surface 170 towards the first side 170A of the work surface 170, it is operable to distribute the powder dosed to the work surface 170 from the second powder container 410B across the build area 190.

Although the first and second powder containers 410A, 410B are depicted in Figure 2A as being positioned below the work surface 170, the first and/or second powder containers 410A, 410B may alternatively be located above the work surface 170 and may be gravity fed. In the event that the first and/or second powder containers 410A, 410B are above the work surface 170, the powder distribution device 320 may have a slot to store the powder received from the first and/or second powder containers 410A, 410B and the powder distribution device 320 may distribute the powder through the slot. Alternatively, if the first and/or second powder containers 410A, 410B are above the work surface 170, the powder distribution device 320 may be a non-contact type powder distribution device which may have a separate container to store powder and one or more nozzles to distribute a layer of powder, and may not require a dosing blade to provide a pile of powder.

Any excess powder at the end of travel of the powder distribution device 320 which has not been used in covering the build area 190 may be collected in the powder container located at the end of travel. For example, when the powder distribution device 320 moves in the first direction (L-R) towards the second side 170B of the work surface 170, the excess powder may be returned to the second powder container 410B, whereas when the powder distribution device 320 moves in the second direction (R-L) towards the first side of the work surface 170, the excess powder may be returned to the first powder container 410A.

Once the excess powder is received at or near the first or the second dosing blade 160A, 160B, the respective dosing blade 160A, 160B may be rotated through a sufficient angle so as to deliver that excess powder to the respective first or second powder container 410A, 410B. The first or the second dosing blade 160A, 160B is then again rotated to provide a fresh pile of powder for distribution.

Figure 2B illustrates a variant of the apparatus of Figure 2A, having a different configuration of dosing blades 160A, 160B. In the apparatus of Figure 2B, each dosing blade 160A, 160B extends on both sides of its axis of rotation (i.e. diametrically). This may be compared with the case in Figure 2A, in which each dosing blade 160A, 160B extends on only one side of its axis of rotation. Accordingly, with the apparatus of Figure 2B, when the first and second dosing blades 160A, 160B are in the rest position as shown, they cover the top of the respective first and second powder containers 410A, 410B. As a consequence, the dosing blades 160A, 160B in the apparatus of Figure 2B reduce the amount of airborne powdery dust that is created during the operation of the dosing blades, and also prevent powdery dust from escaping from the powder containers when the dosing blades are in the rest position as shown.

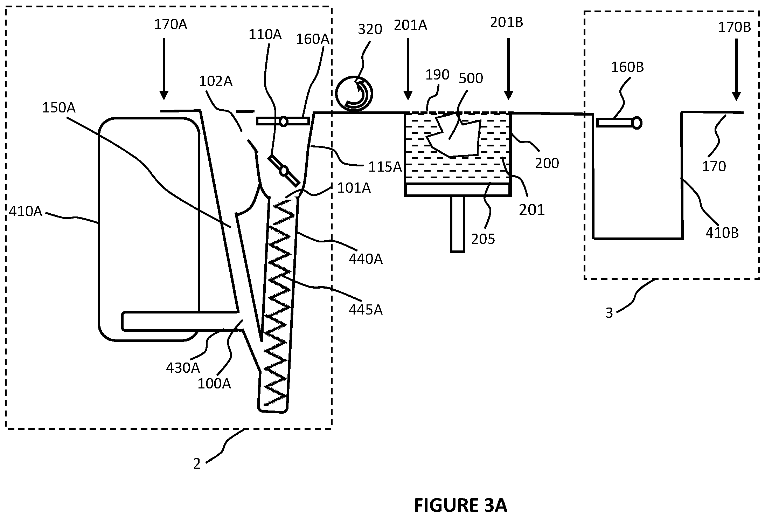

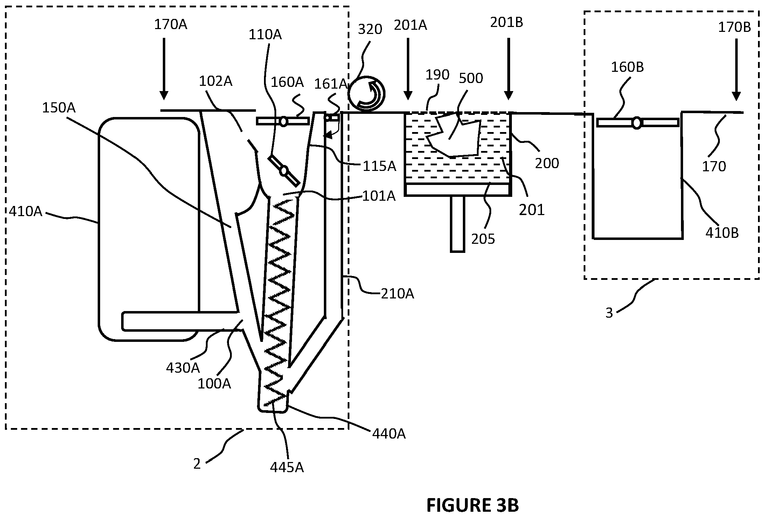

### Embodiment 2 (Figures 3A, 3B)

According to another embodiment, the powder supply arrangement of apparatus 1 may be provided as shown in Figure 3A. A first powder supply module 2 provided on the first side 170A of the work surface 170, outward from the first side 201A of the build bed 201, comprises a first powder container 410A, a first supply tube 430A, a first recirculation tube 150A, a first delivery tube 440A and a first powder repository 115A. A first delivery path is coupled to an outlet of the first powder container 410A. The first delivery path comprises a first delivery mechanism for delivering the powder from the first powder container to the first powder repository. The second powder supply module 3, on the second side 170B of the work surface 170, outward from the second side 201B of the build bed 201, is as described above in relation to Figure 2A.

In use, powder from the first powder container 410A travels into the first supply tube 430A. The first supply tube 430A may comprise an agitator arranged within the first supply tube 430A, which aids the free flow of the powder along the first supply tube 430A to the first recirculation tube 150A. The first supply tube 430A may be inclined at an angle such that the powder may flow by gravitational force. The powder enters the first recirculation tube 150A at an inlet 100A which may be located part way along the length of the first recirculation tube 150A, and then enters the first delivery tube 440A part way along the length of the first delivery tube 440A. For example, the first supply tube 430A may be connected to the first recirculation tube 150A at a location closer to a downstream end rather than the middle of the first recirculation tube 150A. Furthermore, the first recirculation tube 150A may be connected to the first delivery tube 440A at a location closer to a downstream end with respect to the direction of powder delivery, of the first delivery mechanism 445A, than the middle of the first delivery mechanism 445A.

The first delivery tube 440A comprises a first delivery mechanism 445A arranged within the first delivery tube 440A, which aids movement of the powder along the first delivery tube 440A to an inlet 101A to the first powder repository 115A. According to one embodiment, the first delivery mechanism 445A comprises an auger screw provided within the first delivery tube 440A, extending at least within the majority of the first delivery tube's 440A length. The auger screw diameter is slightly smaller than the inner diameter of the first delivery tube 440A, such that the auger screw is capable of rotation within the first delivery tube 440A. As known in the art, an auger screw comprises a helical blade, which, when rotated within the first delivery tube 440A, conveys the powder along the direction of the axis of rotation. The auger screw may be arranged to convey the powder from the inlet 100A along the first delivery tube 440A towards the inlet 101A of the first powder repository 115A by imparting a force on the powder along the axis of rotation. According to one embodiment, the first delivery tube 440A may be arranged at an angle to the vertical direction, such that the first delivery tube 440A is angled upwards with respect to the gravitational direction.

The first delivery tube 440A is connected to a substantially horizontal first powder repository 115A at an inlet 101A, which may for example take the overall shape of an elongated slot. The auger screw 445A conveys the powder along the first delivery tube 440A into the first powder repository 115A via inlet 101A. The inlet 101A acts as a feed point, feeding the powder into the first powder repository 115A.

An agitator 110A may be provided within the first powder repository 115A. Movement of the agitator 110A within the first powder repository 115A keeps the powder in a free flowing or near free flowing state, such that it prevents the powder from agglomerating before it is delivered onto the work surface 170 and allows it to spread along the length of the agitator by gravitational force.

The first powder repository 115A comprises an outlet 102A such that when the powder reaches a certain level within the first powder repository 115A, the powder flows through the outlet 102A and is reintroduced into the first delivery tube 440A. The powder from outlet 102A travels along the first recirculation tube 150A. The first recirculation tube 150A may be arranged such that the powder enters and travels along it by gravitational force.

According to the embodiment illustrated in Figure 3A, the first recirculation tube 150A may be connected to the first supply tube 430A before connecting to the first delivery tube 440A, such that powder from the first supply tube 430A is mixed with the recirculated powder in the first recirculation tube 150A before entering the first delivery tube 440A, and then is conveyed along the first delivery tube 440A by the first delivery mechanism 445A.

The first recirculation tube 150A may comprise an agitator arranged over part or all of the length of the first recirculation tube 150A to ensure free flow of the powder along the recirculating tube 150A.

The first recirculation tube 150A may be thermally insulated. Alternatively, where first the delivery tube 440A is heated, the first recirculation tube 150A may also be heated, preferably to the same temperature as the first delivery tube 440A, in cases where the powder material can tolerate elevated temperatures without degrading. Furthermore, when the first powder container 410A is unheated, the first supply tube 430 may be thermally decoupled from the first recirculation tube 150A via insulation between the first supply tube 430 and the first recirculation tube 150A.

A second powder supply module 3 on the second side 170B of the work surface 170, outward from the second side 201B of the build bed 201, comprises a second powder container 410B and a dosing blade 160B.

When the powder distribution device 320 moves in the first direction (L-R) towards the second side 170B of the work surface 170, it distributes the powder dosed to the work surface 170 from the first powder repository 115A across the build area 190. Conversely, when the powder distribution device 320 moves in the second direction (R-L) towards the first side 170A of the work surface 170, it spreads the powder dosed to the work surface 170 from the second powder container 410B across the build area 190.

Any excess powder at the end of travel of the powder distribution device 320 in the second direction (R-L) towards the first side of the work surface is arranged to be deposited into the first recirculation tube 150A rather than the first powder repository 115A so as not to overfill the first powder repository 115A and to have a control over the size of the powder portion for the next layer which will be provided by the first dosing blade 160A. Any excess powder at the end of travel of the powder distribution device 320 in the first direction (L-R) towards the second side of the work surface is deposited into the second powder container 410B.

In a variant of the arrangement shown in Figure 3A, the first powder supply module 2 may be provided on the second side 170B of the work surface 170, outward from the second side 201B of the build bed 201, whilst the second powder supply module 3 may be provided on the first side 170A of the work surface 170, outward from the first side 201A of the build bed 201.

Figure 3B shows a variant of the apparatus of Figure 3A. In addition to the features of Figure 3A, Figure 3B further comprises a first return tube 210A, the inlet of which is located between the first side 201A of the build bed 201 and the first dosing blade 160A. The first return tube 210A is arranged in the direction of the delivery tube 440A and is connected downstream of the first delivery tube 440A, such that the powder from the first return tube 210A is entered into and used by the first delivery tube 440A before the powder from the first recirculation tube 150A or the first supply tube 430A.

Further, in the arrangement shown in Figure 3B, any excess powder at the end of travel of the powder distribution device 320 in the second direction (R-L) towards the first side of the work surface may be deposited into the first return tube 210A. A flap 161A is pivoted at one side of the first return tube 210A. The flap 161A is used to cover the first return tube 210A and is provided at the top of the first return tube 210A. The flap 161A prevents the powder entering into the first return tube 210A during the powder distribution pass. When the excess powder is to be deposited into the first return tube 210A, the flap 161A may be rotated inwards of the first return tube 210A such that it does not come in the way of the powder distribution device 320 and the powder falls into the first return tube 210A. Any excess powder at the end of travel of the powder distribution device 320 in the first direction (L-R) towards the second side of the work surface may be deposited into the second powder container 410B.

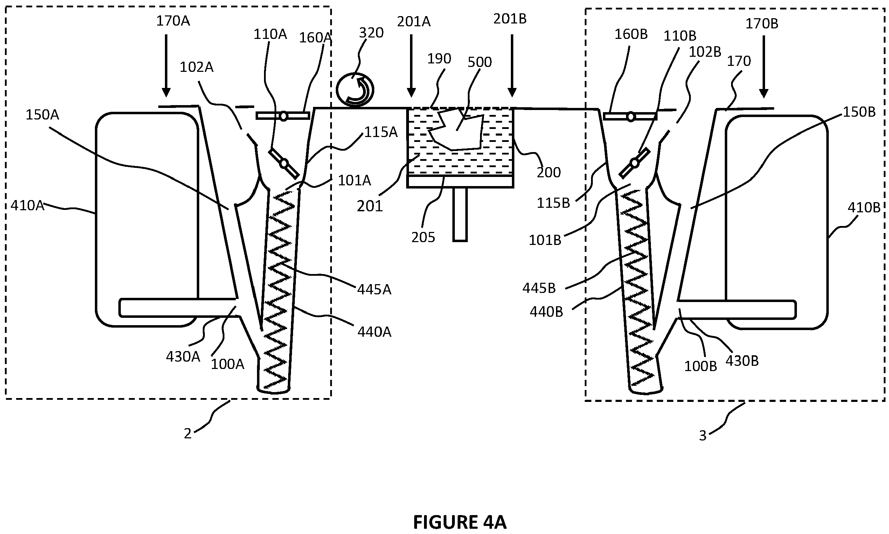

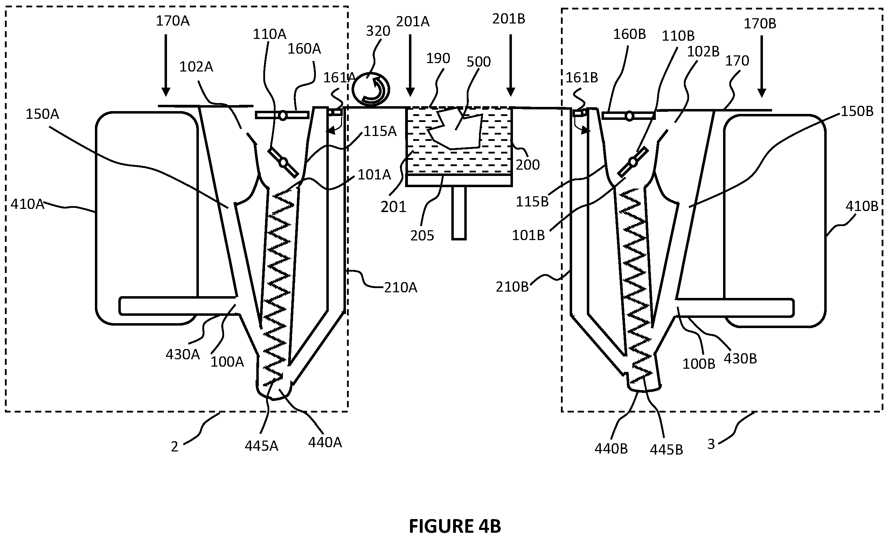

### Embodiment 3 (Figures 4A, 4B)

According to another embodiment, the powder supply arrangement of apparatus 1 may be provided as illustrated in Figure 4A. A first powder supply module 2 provided on the first side 170A of the work surface 170, outward from the first side 201A of the build bed 201, comprises a first powder container 410A, a first supply tube 430A, a first recirculation tube 150A, a first delivery tube 440A and a first powder repository 115A; while a second powder supply module 3 provided at a second side 170B of the work surface 170, outward from the second side 201B of the build bed 201, comprises a second powder container 410B, a second supply tube 430B, a second recirculation tube 150B, a second delivery tube 440B and a second powder repository 115B. The powder is delivered to the work surface with the help of a first and a second delivery mechanism 445A, 445B such as an auger screw.

The first and the second powder supply modules 2, 3 depicted in Figure 4A have similar features and/or components to those of the first powder supply module 2 depicted in Figure 3A.

In use, as shown in Figure 4A, powder from the first powder container 410A of the first powder supply module 2 is provided to the first recirculation tube 150A through the first supply tube 430A. The powder then enters the first delivery tube 440A and is then conveyed to the first powder repository 115A using the first delivery mechanism 445A. The first dosing blade 160A provides the powder from the first powder repository 115A to the work surface 170. The powder distribution device 320 then spreads a pile of powder across the build area 190 and any excess powder will be conveyed to the second recirculation tube 150B of the second powder supply module 3.

Similarly, powder from the second powder container 410B of the second powder supply module 3 enters the second recirculation tube 150B through the second supply tube 430B, which may then be mixed with recirculated powder and provided to the second delivery tube 440B. The second delivery mechanism 445B delivers the powder to the second powder repository 115B, and the second dosing blade 160B provided at or near the top of the second powder repository 115B then supplies a pile of powder to the work surface 170. The powder distribution device 320 distributes a layer of powder across the build area 190 and conveys any excess powder to the first recirculation tube 150A of the first powder supply module 2.

Figure 4B shows a variant of the apparatus of Figure 4A. In addition to the features of Figure 4A, Figure 4B further comprises a first return tube 210A (the inlet of which is located between the first side 201A of the build bed 201 and the first dosing blade 160A) and a second return tube 210B (the inlet of which is located between the second side 201B of the build bed 201 and the second dosing blade 160B). The first return tube 210A is arranged in the direction of the first delivery tube 440A and is connected downstream of the first delivery tube 440A, such that the powder from the first return tube 210A is entered into and used by the first delivery tube 440A before the powder from the first recirculation tube 150A or the first supply tube 430A. The second return tube 210B is arranged in the direction of the second delivery tube 440B and is connected downstream of the second delivery tube 440B such that the powder from the second return tube 210B is entered into and used by the second delivery tube 440B before the powder from the second recirculation tube 150B or the second supply tube 430B.

Any excess powder at the end of the travel of the powder distribution device 320 in the second direction (R-L) towards the first side of the work surface may be deposited into the first return tube 210A, while any excess powder at the end of the travel of the powder distribution device 320 in the first direction (L-R) towards the second side of the work surface may be deposited into the second return tube 210B.

The first return tube 210A and the second return tube 210B are each provided with a respective flap 161A and 161B, pivoted at one side (the side nearest the respective dosing blade 160A, 160B) of the first and second return tubes 210A, 210B respectively. The flaps 161A, 161B are used to cover the respective first and second return tubes 210A, 210B and are provided at the top of the first and second return tubes 210A, 210B. The flaps 161A, 161B prevent the powder entering into the first and/or second return tube 210A, 210B during the powder distribution pass. When the excess powder is to be deposited into the first and/or second return tube 210A, 201B, the flap 161A, 161B may be rotated inwards of the first and/or second return tube 210A, 210B such that it does not come in the way of the powder distribution device 320 and the powder falls into the first and/or second return tube 210A, 210B.

It should be appreciated that even though Figures 3A, 3B, 4A and 4B depict an arrangement in which the supply tube is coupled to the recirculation tube which in turn is then connected to the delivery tube, alternative arrangements are possible. For example, the recirculation tube may be coupled to the supply tube, and the supply tube may then be connected to the delivery tube; or the supply tube and the recirculation tube may be separately connected to the delivery tube. Alternatively, the supply tube may be coupled upstream of the delivery tube and the recirculation tube may be connected downstream of the delivery tube.

It should be noted that although Figures 3A, 3B, 4A and 4B illustrate the delivery tube 440A, 440B connecting to one end of the respective repository 115A, 115B, the delivery tube 440A, 440B may be connected at any location along the respective repository 115A, 115B, such as, at or near one end of the repository 115A, 115B, or about halfway along the length of the repository 115A, 115B. According to another embodiment, there may be provided more than one delivery tube 440 and inlet 101, such that the powder is conveyed into the respective repository 115A, 115B from multiple inlets 101.

It should be appreciated that references to the supply tube and recirculation tube do not limit such tubes to having a cylindrical cross section. Instead, the tubes may have any suitable cross section, for example that of a semicircle, oblong, or rectangular cross section etc.

The powder repository, the supply tube and the recirculation tube may all be considered flow paths for the powder. Additionally, the powder repository, the supply tube and the recirculation tube may comprise an agitator so as to maintain the powder in a free flowing state whilst travelling along these powder flow paths. Alternatively, the supply tube and the recirculation tube may not comprise an agitator.

It should be noted that, even though the embodiments of the powder supply arrangements illustrated in Figures 1, 2A, 2B, 3A, 3B, 4A and 4B depict the powder supply modules 1 and 2 as arranged on opposite sides of the build bed 201, the powder supply modules 1 and 2 may alternatively be arranged on adjacent (orthogonal) sides of the build bed 201, and the powder distribution device 320 may distribute the powder in orthogonal directions such that the powder is uniformly distributed.

### Sled layouts

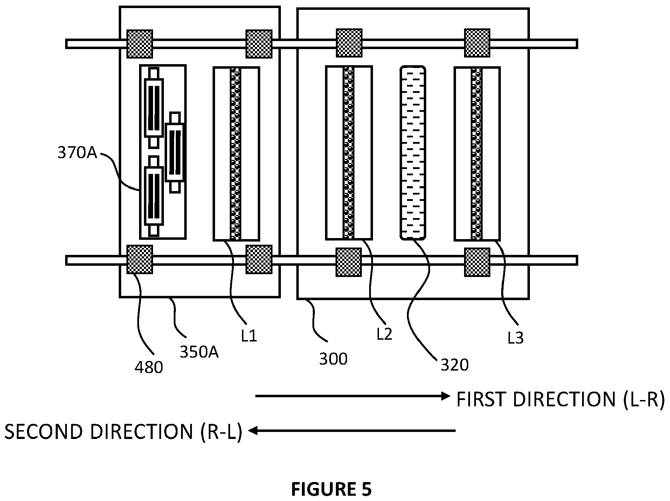

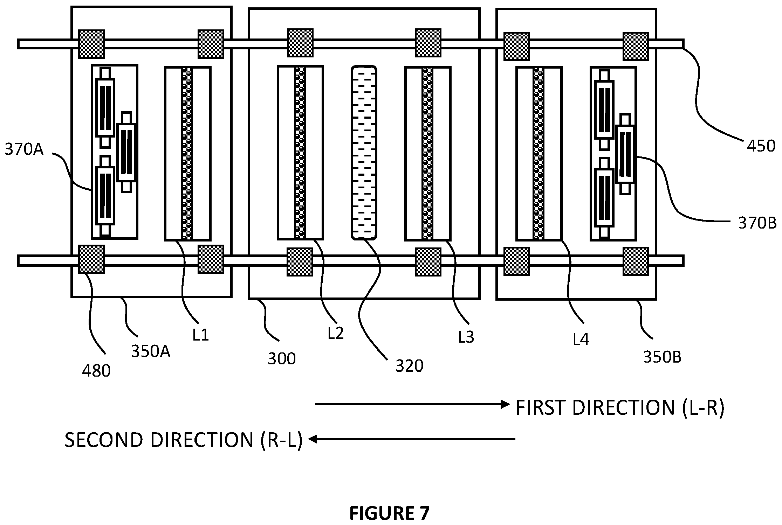

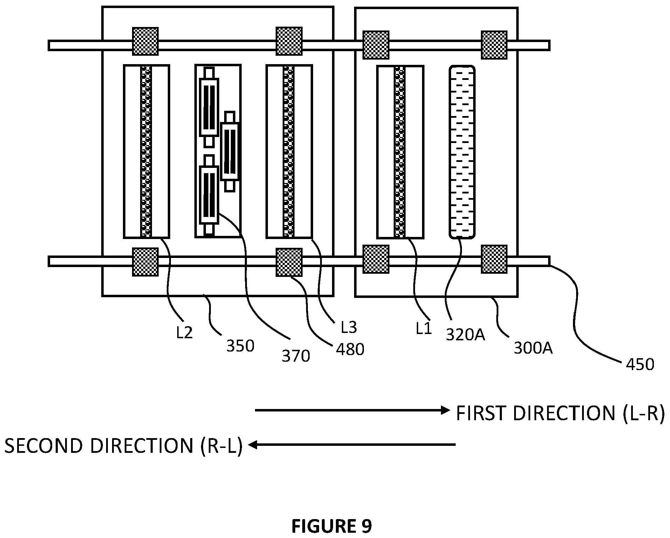

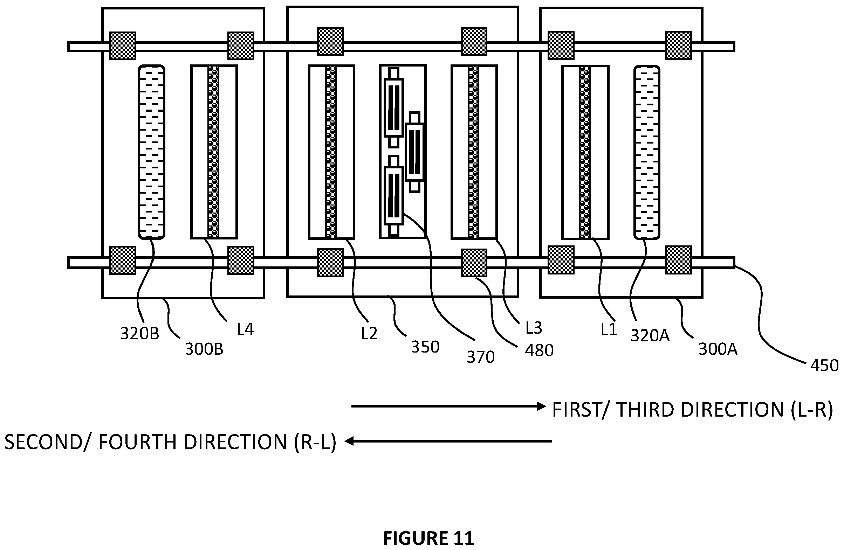

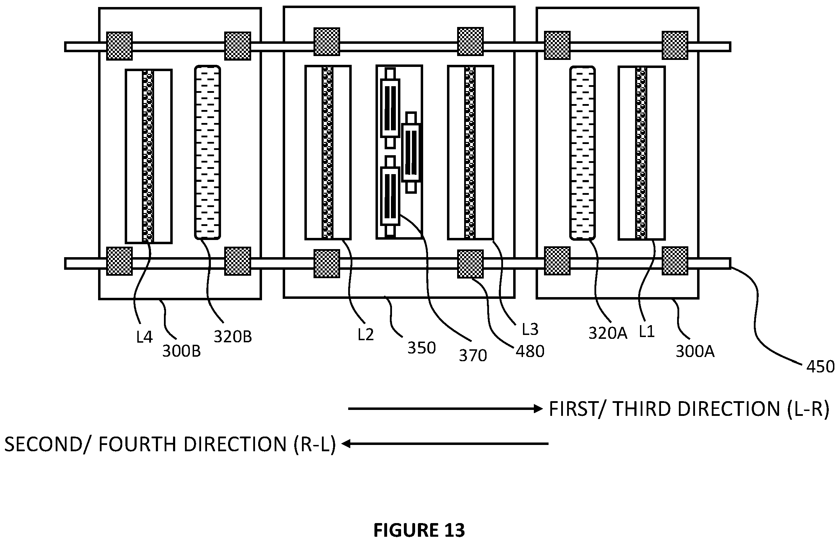

Turning now to the operation of the powder distribution sled 300 and the print sled 350, Figure 1 illustrates two independently operable sleds 300, 350 provided above the work surface 170 of the apparatus 1. Figures 5 and 9 illustrate two different layouts of the print sled 350 and the powder distribution sled 300. Figures 7 shows an additional print sled 350B to the sled layout depicted in Figure 5, while Figure 11 illustrates an additional powder distribution sled 300B to the sled layout depicted in Figure 9. Figure 13 shows a variant of the sled layout illustrated in Figure 11.

The two different layouts illustrated in Figures 5 and 9 will now be described with respect to an apparatus 1 such as illustrated in Figure 1, having an arrangement direction from the first powder supply module 2 on the first side 170A of the work surface 170, outward from the first side 201A of the build bed 201 (on the left as illustrated), to the second powder supply module 3 on the second side 170B of the work surface 170, outward from the second side 201B of the build bed 201 (on the right as illustrated). This direction from the first powder supply module 2 towards the second powder supply module 3 (from left towards right as illustrated) will be referred to as the "first direction (L-R)" herein, and the opposite direction (from right towards left as illustrated) will be referred to as the "second direction (R-L)" herein. It will be appreciated that the references to "left" and "right" herein are merely for ease of understanding with respect to the drawings, and that mirror-image versions of the present apparatus and methods can be made in which the concepts of "left" and "right" are essentially reversed.

As will be described below, each of the arrangements of the sleds illustrated in Figures 5 and 9 necessitates a different order in the 3D object manufacturing steps, and each arrangement has its own advantages.

It should be noted that the sled layouts presented in Figures 5 and 9 are for illustrative purposes only. These are merely examples of possible sled layouts, and other examples of sled layouts are also envisaged.

Figure 5 illustrates, in the arrangement direction of Figure 1, arrangements of the powder distribution sled 300 and the first print sled 350A according to a first sled layout "A". Figure 9 illustrates, in the arrangement direction of Figure 1, arrangements of the first powder distribution sled 300A and the print sled 350 according to a second sled layout "B".

In both the arrangements of Figures 5 and 9, the powder distribution sled 300, 300A is operable to distribute a layer of powder within the build area 190, and is driveable in a first direction (left to right as illustrated, i.e. L-R) along a first axis across the build area 190, and is driveable in a second direction (right to left as illustrated, i.e. R-L), opposite to the first direction, along the first axis. That is to say, the powder distribution sled 300, 300A is bi-directionally driveable along the first axis across the build area 190. A powder distribution device 320 mounted on the powder distribution sled 300, 300A distributes the layer of powder. The print sled 350, 350A is operable to deposit a pattern of fluid onto the layer of powder within the build area 190, to define the geometry of the 3D object in that layer. The print sled 350, 350A is bi-directionally driveable along a second axis across the build area 190. According to the invention, the first axis is parallel to, or coaxial, with the second axis. However, in alternative embodiments the first axis may be orthogonal to the second axis.

One or more droplet deposition heads 370, 370A mounted on the print sled 350, 350A deposit the pattern of fluid onto the layer of powder. The one or more droplet deposition heads 370, 370A may be standard drop-on-demand droplet deposition heads suitable for use in a three-dimensional object manufacturing apparatus, such as a Xaar 1003 printhead. The Xaar 1003 printhead for example is able to deposit fluid suspended or soluble in a variety of fluids, and tolerates well in the challenging hot and particulate environment of a three-dimensional object printer, due to its highly effective ink recirculation technology. Furthermore, an insulated housing may be provided around the droplet deposition heads to provide shielding from the heat.

The one or more droplet deposition heads 370, 370A may deposit one or more fluids as described above.

An overhead radiation source assembly 460 may be provided above the build area 190 to preheat the build area 190 and to provide a uniform temperature on the surface of the build area 190. The overhead radiation source assembly 460 may be a fixed infrared radiation source, such as ceramic heater or any other suitable radiation source.

Thermal feedback may be provided in order to control the temperature of the build area 190. For example, the temperature of the surface of the build area 190 may be measured with a temperature sensor such as an infrared camera, and a feedback loop may be provided to control the operation of the overhead radiation source assembly 460.

Returning to Figure 1, the sleds 300, 350 may be moved across the work surface 170 of the apparatus 1 via motors provided on each sled 300, 350 which may utilise the same drive belt or different drive belts. The apparatus 1 may use a shared drive mechanism or a separate drive mechanism for the drive belts. It should be appreciated that other methods of moving the sleds may be utilised, as known in the art. According to one embodiment, the two sleds 300, 350 are mounted on the same set of rails (i.e. on a common track). According to other embodiments, the two sleds 300, 350 may be mounted on separate rails (i.e. separate parallel tracks). The sets of separate rails may be arranged above one another or alongside one another. According to another embodiment, the two sleds 300, 350 are arranged offset from each other in a direction perpendicular to the direction of movement laterally and/or vertically. Moreover, the two sleds 300, 350 may be independently movable or may in some cases be movable together, in tandem, i.e. essentially as a combined sled. For example, the sleds 300 and 350 in the second sled layout "B", described below, can operate as a combined sled. The movement of the sleds and the timing between the sleds may be controlled by the controller 550. The sleds may typically move at a speed of 200 mm/second.

In order to provide ease of access to the build area 190, the rails 450 may be offset from one another vertically. For example, the rail at the front of the machine may be below the level of the work table 170 to allow easy access to the build chamber 200, whilst the back rail may be above the height of the work table 170 to allow access for maintaining or cleaning the rail.

According to one embodiment, bearings 480 may be provided on both sides of each sled 300, 350, the bearings 480 being moveable orthogonal to the direction of movement of the sleds 300, 350 to allow the sleds 300, 350 to expand or contract with changes in temperature.

The position of the sleds 300, 350 relative to the build area 190 may be monitored by a position sensor provided on each sled 300, 350. The position sensors may be magnetic sensors with a scale mounted on a static part of the machine, a rotary encoder, an optical sensor with a scale mounted on a static part of the machine, laser positioning, etc. Alternatively, a position sensor may be mounted on a static part of the machine, to determine the positions of the sleds 300, 350.

Reference to "steps" in the methods described below should not be interpreted as necessarily sequential, and may take place simultaneously with one another.

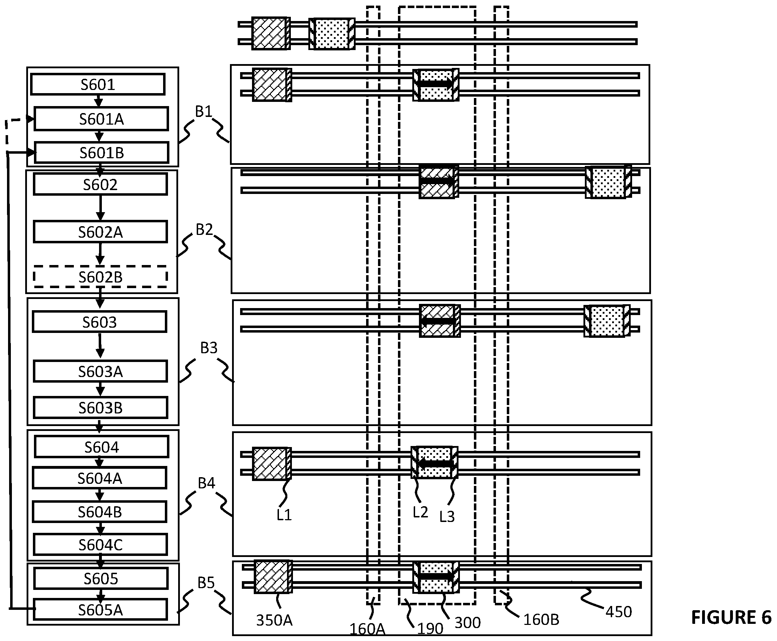

### First sled layout "A" and its method of operation (Figures 5, 6)

Now, the first sled layout "A" will be described with reference to Figure 5. As shown in Figure 5, the powder distribution sled 300 comprises a powder distribution device 320 to distribute powder, a first radiation source assembly L2 located on one side of the powder distribution device 320, and a second radiation source assembly L3 located on the other side of the powder distribution device 320. The first print sled 350A comprises one or more droplet deposition heads 370A to deposit fluid, and a third radiation source assembly L1 located on one side of the droplet deposition heads 370A, in a first direction relative to the droplet deposition heads 370A. It should be noted that the first print sled 350A may also comprise a further radiation source assembly on the other side of the droplet deposition heads 370, in a second direction, opposite to the first direction, relative to the droplet deposition heads 370.

As illustrated in Figure 5, the powder distribution sled 300 is bi-directionally driveable along a first axis across the build area 190, in a first direction (L-R) and back in a second direction (R-L). The first print sled 350A is bi-directionally driveable along a second axis across the build area 190. The second axis is parallel to, or coaxial with, the first axis.

A method for powder distribution, fluid deposition and sintering utilising the sled layout as illustrated in Figure 5 (with the apparatus of any of Figures 1 to 4) will now be described, with reference to Figure 6.

To begin with, the powder distribution sled 300 and the first print sled 350A are located at a first side (left side as illustrated) of the work surface 170.

According to Figure 6, the build process comprises five different stages B1 to B5, each stage representing the sled movement and associated steps or sub-steps.

First, as a preparatory step, the buffer layers are distributed. Before distributing a new layer of powder for the build process, the build chamber floor 205 may be lowered by the thickness of the layer to be distributed. The first dosing blade 160A is rotated to provide a fresh pile of powder from the first powder supply module 2 to the work surface 170 along the full length of the first dosing blade 160A, ready for distribution.

Then the build process begins with a stage B 1 which comprises a step S601 of powder distribution sled 300 movement in the first direction (L-R) and two associated sub-steps S601A and S601B. At step S601, the powder distribution sled 300 is moved in the first direction (L-R) from the first side 170A of the work surface 170 towards the second side (right side as illustrated) of the work surface 170, over the first dosing blade 160A and simultaneously causing a layer of powder to be distributed across the build area 190 by the powder distribution device 320 at sub-step S601A, as a first layer in the build process. At the same time, at sub-step S601B, the first radiation source assembly L2 may be activated to preheat (Preheat step 1) the dosed powder as it is distributed. Any excess powder is delivered to the second powder supply module 3, as the powder distribution sled 300 reaches to the second side 170B of the work surface 170.

Then, the next stage B2 comprises a step S602 of print sled 350A movement in the first direction (L-R) and two associated sub-steps S602A and S602B. At step S602, the first print sled 350A is moved in the first direction (L-R) towards the powder distribution sled 300 from the first side 170A of the work surface 170 towards the second side 170B of the work surface 170 (but, depending on what needs to be printed, not necessarily all the way across the build area 190). As the first print sled 350A moves across the build area 190, at sub-step S602A, the third radiation source assembly L1 may be activated to preheat (Preheat step 2) the layer of powder and optionally, at sub-step S602B, one or more droplet deposition heads 370A may deposit the fluid such as radiation absorbing material (RAM).

The next stage B3 comprises a step S603 of print sled 350A movement in the second direction (R-L) and two associated sub-steps S603A and S603B. At step S603, the first print sled 350A is driven in the second direction (R-L) from the second side 170B of the work surface 170 (or as far across the build area 190 as the print sled 350 has travelled) back towards the first side 170A of the work surface 170. During this pass, at sub-step S603A, the droplet deposition heads 370A may deposit the fluid, or may deposit the same fluid as that deposited during sub-step S602B. Alternatively, the droplet deposition heads 370A may deposit a different or a second fluid which may have a different colour or may have different properties. For example, the second fluid may be a non-sinter-promoting fluid and may enhance the edge definitions of the object. Sometimes, the step S603A is advantageous if there are defective or non-uniform nozzles of the droplet deposition head. The nozzles of the droplet deposition head may be shifted in a transverse direction from the printing direction and another layer of fluid deposited to avoid dislocations through a finished part.

During this pass of the first print sled 350A, the third radiation source assembly L1 may be activated at sub-step S603B to sinter (Sinter step 1) the parts of the layer on which the fluid was deposited during sub-step S602B and/or sub-step S603A.

The next stage B4 comprises a step S604 of powder distribution sled 300 movement in the second direction (R-L) and three associated sub-steps S604A, S604B and S604C. During the print sled movement at step S603 or, if preferred, after the print sled has passed over the build area 190, the second dosing blade 160B may be rotated to provide a fresh pile of the powder from the second powder module 3 to the work surface 170. The build chamber floor 205 may be lowered by the thickness of the layer to be distributed. At step S604, the powder distribution sled 300 is moved in the second direction (R-L) towards the first print sled 350A. The first radiation source assembly L2 may be activated at sub-step S604A to sinter (Sinter step 2) the parts of the layer on which the fluid was deposited during sub-step S602B and/or sub-step S603A. Simultaneously, at sub-step S604B, the powder distribution device 320 distributes a layer of powder across the build area 190. At the same time, the second radiation source assembly L3 may be activated at sub-step S604C to preheat (Preheat step 3) the distributed powder. Any excess powder at the end of this pass of powder distribution sled 300 is conveyed to the first powder supply module 2.

The next stage B5 comprises a step S605 of powder distribution sled 300 movement in the first direction (L-R) and associated sub-step S605A. The first dosing blade 160A may be rotated to provide a fresh pile of powder from the first powder supply module 2 to the work surface 170. At step S605, the powder distribution sled 300 is driven in the first direction (L-R) from the first side 170A of the work surface 170 towards the second side 170B of the work surface 170. During this pass, at sub-step S605A, the second radiation source assembly L3 may be activated to preheat (Preheat step 4) the layer of powder distributed during sub-step S604B. The process then may repeat from sub-step S601A by distributing a further layer of powder so as to vary the thickness of the layer of three-dimensional object along z-direction, or the process may repeat from sub-step S601B by preheating (Preheat step 3) the layer of powder distributed during sub-step S604B.

From the above, it will be appreciated that the processing of one layer comprises the steps of distributing powder, preheating, depositing fluid and sintering. The above method provides the capability of processing one layer using four passes of the sleds, with four preheat steps which may help to prevent curling of the object and two sinter steps which may improve the bonding between the two layers of powder, thus rapidly manufacturing a good quality three-dimensional object having good intra- and/or inter-layer strength. Moreover, the above method is advantageous in its ability to distribute powder twice per printed layer - this may be beneficial in situations where it is challenging to distribute the required quantity of powder with a single powder distribution step.

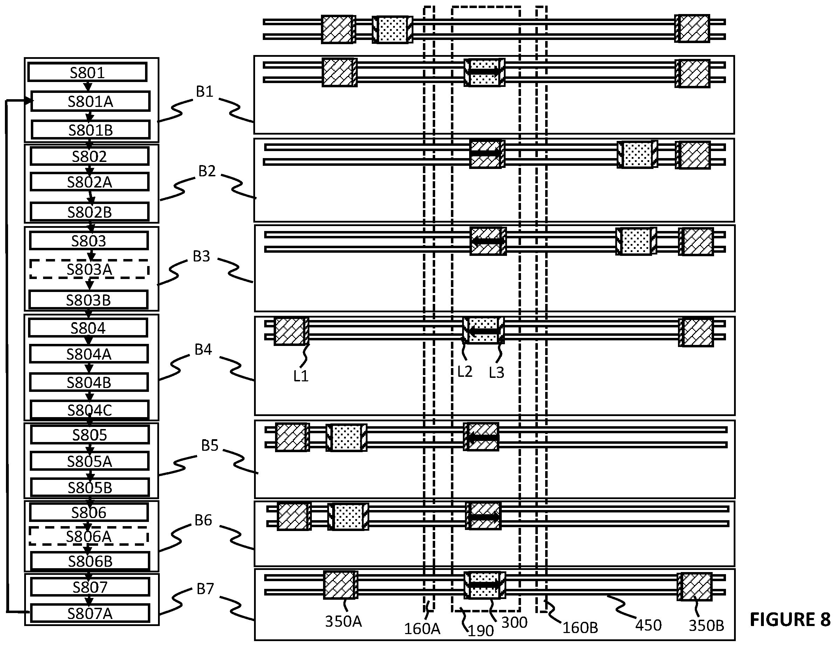

### First sled layout "A" with additional print sled and its method of operation (Figures 7, 8)

The first sled layout "A" depicted in Figure 5 may comprise an additional powder distribution sled with a powder distribution device and a radiation source assembly on one side of the powder distribution device, or may comprise an additional print sled with one or more droplet deposition heads and a radiation source assembly on one side of the droplet deposition heads.

Moreover, the additional sled may comprise two radiation source assemblies - one on either side of the powder distribution device, or one on either side of the one or more droplet deposition heads.

In a general sense, the additional sled is bi-directionally driveable along a third axis across the build area 190. In the presently-preferred embodiments the third axis is parallel to, or coaxial with the first axis. However, in alternative embodiments the third axis may be orthogonal to the first axis.

Moreover, the first, second and third axes may all be parallel to, or coaxial with one another.

Figure 7 illustrates the first sled layout "A" and an additional print sled 350B. Thus, Figure 7 comprises a first print sled 350A, a powder distribution sled 300 and a second print sled 350B. The first print sled 350A and the powder distribution sled 300 have a similar configuration as that shown in Figure 5. The second print sled 350B comprises one or more droplet deposition heads 370B and a fourth radiation source assembly L4 on one side of the droplet deposition heads 370B. The second print sled 350B is bi-directionally driveable along the third axis, which is coaxial with the first and second axes in the illustrated embodiment.

A method for powder distribution, fluid deposition and sintering utilising the sled layout as illustrated in Figure 7 (with the apparatus of any of Figures 1 to 4) will now be described, with reference to Figure 8.

To begin with, the powder distribution sled 300 and the first print sled 350A are located at a first side (left side as illustrated) of the work surface 170, and the second print sled 350B is located at a second side (right side as illustrated) of the work surface 170.

According to Figure 8, the build process comprises seven different stages B 1 to B7, each stage representing the sled movement and associated steps or sub-steps.

First, as a preparatory step, the buffer layers are distributed. Before distributing a new layer of powder for the build process, the build chamber floor 205 may be lowered by the thickness of the layer to be distributed. The first dosing blade 160A is rotated to provide a fresh pile of powder from the first powder supply module 2 to the work surface 170 along the full length of the first dosing blade 160A, ready for distribution.

Then the build process begins with a stage B1 which comprises a step S801 of powder distribution sled 300 movement in the first direction (L-R) and two associated sub-steps S801A and S801B. At step S801, the powder distribution sled 300 is moved in the first direction (L-R) towards the second print sled 350B, from the first side 170A of the work surface 170 towards the second side 170B of the work surface 170, over the first dosing blade 160A and simultaneously causing a layer of powder to be distributed across the build area 190 by the powder distribution device 320 at sub-step S801A, as a first layer in the build process. At the same time, at sub-step S801B, the first radiation source assembly L2 may be activated to preheat (Preheat step 1) the dosed powder as it is distributed. Any excess powder is delivered to the second powder supply module 3, as the powder distribution sled 300 reaches to the second side 170B of the work surface 170.

Then, the next stage B2 comprises a step S802 of first print sled 350A movement in the first direction (L-R) and two associated sub-steps S802A and S802B. At step S802, the first print sled 350A is moved in the first direction (L-R) towards the powder distribution sled 300 from the first side 170A of the work surface 170 towards the second side 170B of the work surface 170 (but, depending on what needs to be printed, not necessarily all the way across the build area 190). As the first print sled 350A moves across the build area 190, at sub-step S802A, the third radiation source assembly L1 may be activated to preheat (Preheat step 2) the layer of powder and at sub-step S802B, one or more droplet deposition heads 370A may deposit the fluid such as radiation absorbing material (RAM).

The next stage B3 comprises a step S803 of first print sled 350A movement in the second direction (R-L) and two associated sub-steps S803A and S803B. At step S803, the first print sled 350A is driven in the second direction (R-L) from the second side 170B of the work surface 170 (or as far across the build area 190 as the first print sled 350A has travelled) back towards the first side 170A of the work surface 170. During this pass, at sub-step S803A, the droplet deposition heads 370A may not deposit any fluid or may deposit the same fluid. Alternatively, the droplet deposition heads 370A may deposit a different or a second fluid which may have a different colour or may have different properties.

During this pass of the first print sled 350A, the third radiation source assembly L1 may be activated at sub-step S803B to sinter (Sinter step 1) the parts of the layer on which the fluid was deposited during sub-step S802B and/or sub-step S803A.

The next stage B4 comprises a step S804 of powder distribution sled 300 movement in the second direction (R-L) and three associated sub-steps S804A, S804B and S804C. During the first print sled 350A movement at step S803 or, if preferred, after the first print sled 350A has passed over the build area 190, the second dosing blade 160B may be rotated to provide a fresh pile of the powder from the second powder module 3 to the work surface 170. The build chamber floor 205 may be lowered by the thickness of the layer to be distributed. At step S804, the powder distribution sled 300 is moved in the second direction (R-L) towards the first print sled 350A. The first radiation source assembly L2 may be activated at sub-step S804A to sinter (Sinter step 2) the parts of the layer on which the fluid was deposited during sub-step S802B and/or sub-step S803A. Simultaneously, at sub-step S804B, the powder distribution device 320 distributes a layer of powder across the build area 190. At the same time, the second radiation source assembly L3 may be activated at sub-step S804C to preheat (Preheat step 3) the distributed powder. Any excess powder at the end of this pass of powder distribution sled 300 is conveyed to the first powder supply module 2.

The next stage B5 comprises a step S805 of second print sled 350B movement in the second direction (R-L) and two associated sub-steps S805A and S805B. The second print sled 350B may start the travel in the second direction (R-L) towards the powder distribution sled 300 during the step S804 of movement of powder distribution sled towards the first print sled 350A or, if preferred, after the powder distribution sled 300 has passed over the build area 190 (but, depending on what needs to be printed, not necessarily all the way across the build area 190). During this pass of the second print sled 350B, the fourth radiation source assembly L4 may be activated at sub-step S805A to preheat (Preheat step 4) the layer of powder distributed during sub-step S804B and simultaneously, the droplet deposition heads 370B may deposit a pattern of fluid onto the layer of powder at sub-step S805B. The droplet deposition heads 370B may deposit the same fluid as that deposited by the droplet deposition heads 370A. Alternatively, the droplet deposition heads 370B may deposit a different or a second fluid which may have a different colour or may have different properties. For example, the second fluid may be a non-sinter-promoting fluid and may enhance the edge definitions of the object. As described above, the fluid deposited by the droplet deposition heads 370B may be a liquid such as radiation absorbing material (RAM) or a fluid powder containing radiation absorbing material. Moreover, the fluid may be a sinter-promoting fluid, a non-sinter-promoting fluid, or a fluid that may inhibit the sintering and may thereby enhance the edge definition of the object.

The next stage B6 comprises a step S806 of second print sled 350B movement in the first direction (L-R) and two associated sub-steps S806A and S806B. At step S806, the second print sled 350B is driven in the first direction (L-R) from the first side 170A of the work surface 170 (or as far across the build area 190 as the print sled 350B has travelled) back towards the second side 170B of the work surface 170. During this pass, at sub-step S806A, the droplet deposition heads 370B may deposit the same or different fluid or the droplet deposition heads 370B may not deposit any fluid. The fourth radiation source assembly L4 may be activated at sub-step S806B to sinter (Sinter step 1) the parts of the layer on which the fluid was deposited during sub-step S805B and/or sub-step S806A.

The next stage B7 comprises a step S807 of powder distribution sled 300 movement in the first direction (L-R) and associated sub-step S807A. The first dosing blade 160A may be rotated to provide a fresh pile of powder from the first powder supply module 2 to the work surface 170. The build chamber floor 205 may be lowered by the thickness of the layer to be distributed. At step S807, the powder distribution sled 300 is driven in the first direction (L-R) towards the second print sled 350B. During this pass, at sub-step S807A, the second radiation source assembly L3 may be activated to sinter (Sinter step 2) the parts of the layer on which the fluid was deposited during sub-step S805B and/or sub-step S806A. The process then repeats from sub-step S801A with the powder distribution device 320 distributing the next layer of powder, until the desired object is manufactured.

From the above, it will be appreciated that the processing of one layer comprises the steps of distributing powder, preheating, depositing fluid and sintering. The above method provides the capability of processing two layers utilising seven passes of the sleds. The processing of each layer comprises two preheat steps which may help to prevent curling of the object and two sinter steps which may improve the bonding between the two layers of the powder, thus rapidly manufacturing a good quality three-dimensional object having good intra- and/or inter-layer strength.

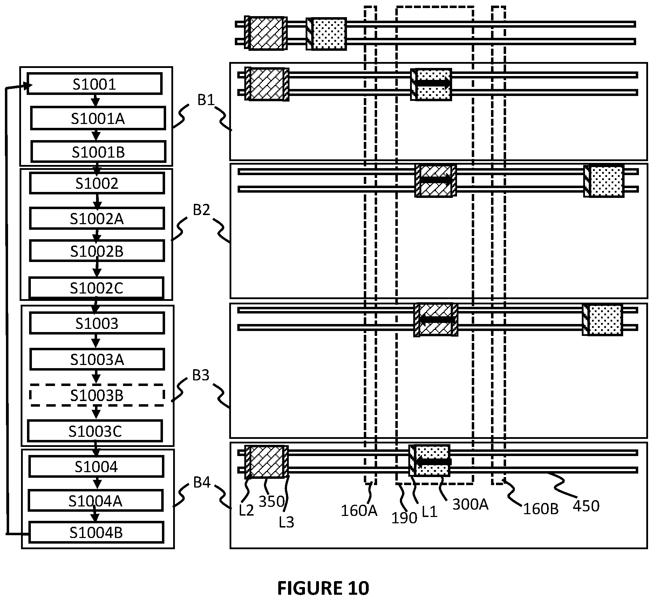

### Second sled layout "B" and its method of operation (Figures 9, 10)

As illustrated in Figure 9, the print sled 350 comprises one or more droplet deposition heads 370 to deposit fluid, a first radiation source assembly L2 located on one side of the droplet deposition heads 370, and a second radiation source assembly L3 located on the other side of the droplet deposition heads 370. The first powder distribution sled 300A comprises a powder distribution device 320 to distribute powder, and a third radiation source assembly L1 located on one side of the powder distribution device 320. It should be noted that the first powder distribution sled 300A may also comprise a further radiation source assembly on the other side of the powder distribution device 320.

A method for powder distribution, fluid deposition and sintering utilising the sled layout as illustrated in Figure 9 (with the apparatus of any of Figures 1 to 4) will now be described, with reference to Figure 10.

To begin with, the first powder distribution sled 300A and the print sled 350 are located at a first side 170A (left side as illustrated) of the work surface 170.

According to Figure 10, the build process comprises four different stages B 1 to B4, each stage representing the sled movement and associated steps or sub-steps.

First, as a preparatory step, the buffer layers are distributed. Before distributing a new layer of powder for the build process, the build chamber floor 205 may be lowered by the thickness of the layer to be distributed. The first dosing blade 160A is rotated to provide a fresh pile of powder from the first powder supply module 2 to the work surface 170 along the full length of the first dosing blade 160A, ready for distribution.

Then the build process begins with a stage B 1 which comprises a step S 1001 of powder distribution sled 300A movement in the first direction (L-R) and two associated sub-steps S1001A and S1001B. At step S1001, the first powder distribution sled 300A is moved in the first direction (L-R) from the first side 170A of the work surface 170 towards the second side (right side as illustrated) of the work surface 170, over the first dosing blade 160A and simultaneously causing a layer of powder to be distributed across the build area 190 by the powder distribution device 320A at sub-step S1001A, as a first layer in the build process. At the same time, at sub-step S1001B, the third radiation source assembly L1 may be activated to preheat (Preheat step 1) the dosed powder as it is distributed. Any excess powder is delivered to the second powder supply module 3, as the first powder distribution sled 300A reaches to the second side 170B of the work surface 170.

Then, the next stage B2 comprises a step S1002 of print sled 350 movement in the first direction (L-R) and three associated sub-steps S1002A, S1002B and S1002C. At step S1002, the print sled 350 is moved in the first direction (L-R) towards the powder distribution sled 300 from the first side 170A of the work surface 170 towards the second side 170B of the work surface 170 (but, depending on what needs to be printed, not necessarily all the way across the build area 190). As the print sled 350 moves across the build area 190, at sub-step S1002A, the second radiation source assembly L3 may be activated to preheat (Preheat step 2) the layer of powder, at sub-step S1002B one or more droplet deposition heads 370 may deposit the fluid such as radiation absorbing material (RAM), and at sub-step S1002C the first radiation source assembly may be activated to sinter (Sinter step 1) the parts of the layer on which the fluid was deposited during sub-step S1002B.

The next stage B3 comprises a step S1003 of print sled 350 movement in the second direction (R-L) and three associated sub-steps S1003A, S1003B and S1003C. At step S1003, the print sled 350 is driven in the second direction (R-L) from the second side 170B of the work surface 170 (or as far across the build area 190 as the print sled 350 has travelled) back towards the first side 170A of the work surface 170. During this pass, at sub-step S1003A the first radiation source assembly may be activated to sinter (Sinter step 2) the parts of the layer on which the fluid was deposited during sub-step S1002B, and at sub-step S1003B the droplet deposition heads 370 may not deposit any fluid or may deposit the same fluid. Alternatively, the droplet deposition heads 370 may deposit a different or a second fluid which may have a different colour or may have different properties. For example, the second fluid may be a non-sinter-promoting fluid and may enhance the edge definitions of the object. Sometimes, the step S1003B is advantageous if there are defective or non-uniform nozzles of the droplet deposition head. The nozzles of the droplet deposition head may be shifted in a transverse direction from the printing direction and another layer of fluid deposited to avoid dislocations through a finished part.

During this pass of the print sled 350, the second radiation source assembly L3 may be activated at sub-step S1003C to sinter (Sinter step 3) the parts of the layer on which the fluid was deposited during sub-step S1002B and/or sub-step S1003B.

The next stage B4 comprises a step S1004 of powder distribution sled 300A movement in the second direction (R-L) and two associated sub-steps S1004A and S1004B. During the print sled 350 movement at step S1003 or, if preferred, after the print sled 350 has passed over the build area 190, the second dosing blade 160B may be rotated to provide a fresh pile of the powder from the second powder module 3 to the work surface 170. The build chamber floor 205 may be lowered by the thickness of the layer to be distributed. At step S1004, the first powder distribution sled 300A is moved in the second direction (R-L) towards the print sled 350. The third radiation source assembly L1 may be activated at sub-step S1004A to sinter (Sinter step 4) the parts of the layer on which the fluid was deposited during sub-step S1002B and/or sub-step S1003A. Simultaneously, at sub-step S1004B, the powder distribution device 320A distributes a layer of powder across the build area 190. Any excess powder at the end of this pass of powder distribution sled 300A is conveyed to the first powder supply module 2. The process then repeats from step S1001, until the desired object is manufactured.

From the above, it will be appreciated that the processing of one layer comprises the steps of distributing powder, preheating, depositing fluid and sintering. In the above method, all these process steps may occur in the same direction of movement of the sleds which may give better thermal uniformity across the build area. The above method provides the capability of processing one layer using four passes of the sleds and with two preheat steps which may help to prevent curling of the object, four sinter steps which may improve the bonding between the two layers of powder and may further have two powder distributions per layer which may allow to form selective thicker layers as required in the object, thus rapidly manufacturing a good quality three-dimensional object having good intra- and/or inter-layer strength.

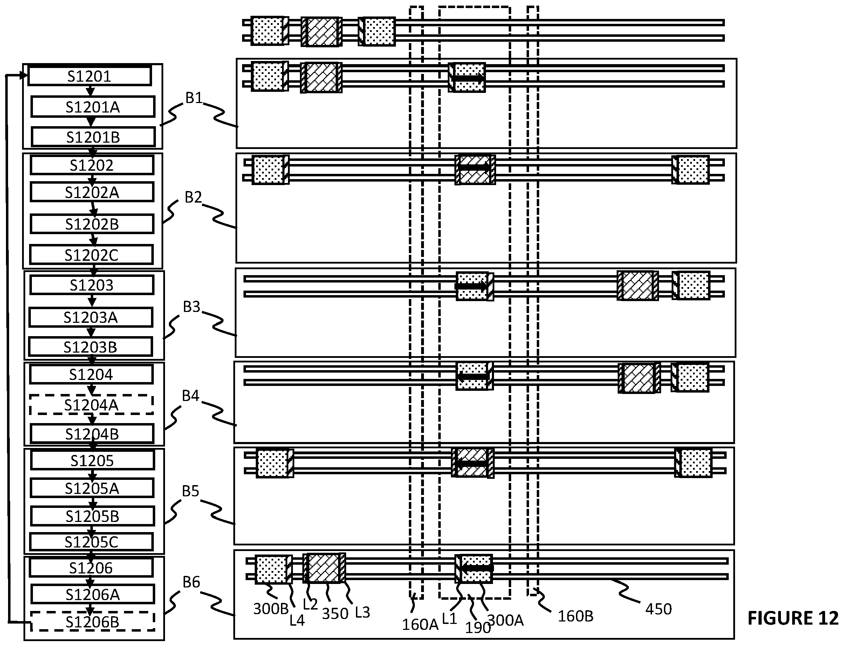

### Second sled layout "B" with additional powder distribution sled and its method of operation (Figures 11, 12)

The second sled layout "B" depicted in Figure 9 may comprise an additional powder distribution sled with a powder distribution device and a radiation source assembly on one side of the powder distribution device, or may comprise an additional print sled with one or more droplet deposition heads and a radiation source assembly on one side of the droplet deposition heads. Moreover, the additional sled may comprise two radiation source assemblies - one on either side of the powder distribution device, or one on either side of the one or more droplet deposition heads.

In a general sense, the additional sled is bi-directionally driveable along a third axis across the build area 190, in a third direction and back in a fourth direction, opposite to the third direction. In the presently-preferred embodiments the third axis is parallel to, or coaxial with the first axis, such that the first and third directions are in the same direction, and the second and fourth directions are in the same direction. However, in alternative embodiments the third axis may be orthogonal to the first axis, such that the first and third directions are orthogonal to one another, and the second and fourth directions are orthogonal to one another.

Moreover, the first, second and third axes may all be parallel to, or coaxial with one another.

Figure 11 illustrates the second sled layout "B" and an additional powder distribution sled 300B. Thus, Figure 11 comprises a first powder distribution sled 300A, a print sled 350 and a second powder distribution sled 300B. The first powder distribution sled 300A and the print sled 350 have a similar configuration as that shown in Figure 9. The second powder distribution sled 300B comprises a powder distribution device 320B and a fourth radiation source assembly L4 on one side of the powder distribution device 320B. As illustrated in Figure 11, the second powder distribution sled 300B is driveable in the first direction (L-R) across the build area (190), and driveable back in the second direction (R-L).

As illustrated in Figure 11, the print sled 350 is located between the first powder distribution sled 300A and the second powder distribution sled 300B.

A method for powder distribution, fluid deposition and sintering utilising the sled layout as illustrated in Figure 10 (with the apparatus of any of Figures 1 to 4) will now be described, with reference to Figure 11.

To begin with, the first powder distribution sled 300A, the print sled 350 and the second powder distribution sled 300B are located at a first side (left side as illustrated) of the work surface 170.

According to Figure 12, the build process comprises six different stages B1 to B6, each stage representing the sled movement and associated steps or sub-steps.

First, as a preparatory step, the buffer layers are distributed. Before distributing a new layer of powder for the build process, the build chamber floor 205 may be lowered by the thickness of the layer to be distributed. The first dosing blade 160A is rotated to provide a fresh pile of powder from the first powder supply module 2 to the work surface 170 along the full length of the first dosing blade 160A, ready for distribution.

Then the build process begins with a stage B1 which comprises a step S1201 of first powder distribution sled 300A movement in the first direction (L-R) and two associated sub-steps S1201A and S1201B. At step S1201, the first powder distribution sled 300A is moved is moved in the first direction (L-R) from the first side 170A of the work surface 170 towards the second side 170B of the work surface 170, over the first dosing blade 160A and simultaneously causing a layer of powder to be distributed across the build area 190 by the powder distribution device 320A at sub-step S1201A, as a first layer in the build process. At the same time, at sub-step S1201B, the third radiation source assembly L1 may be activated to preheat (Preheat step 1) the dosed powder as it is distributed. Any excess powder is delivered to the second powder supply module 3, as the first powder distribution sled 300A reaches to the second side 170B of the work surface 170.

Then, the next stage B2 comprises a step S1202 of print sled 350 movement in the first direction (L-R) and three associated sub-steps S1202A, S1202B and S1202C. At step S1202, the print sled 350 is moved in the first direction (L-R) towards the first powder distribution sled 300A from the first side 170A of the work surface 170 towards the second side 170B of the work surface 170 (but, depending on what needs to be printed, not necessarily all the way across the build bed 190). As the print sled 350 moves across the build area 190, at sub-step S1202A, the second radiation source assembly L3 may be activated to preheat (Preheat step 2) the layer of powder, at sub-step S1202B, one or more droplet deposition heads 370 may deposit the fluid such as radiation absorbing material (RAM) and at sub-step S1202C, the first radiation source assembly L2 may be activated to sinter (Sinter step 1) the parts of the layer on which the fluid was deposited during sub-step S1202B.

The next stage B3 comprises a step S1203 of second powder distribution sled 300B movement in the first direction (L-R) and two associated sub-steps S1203A and S1203B. The build chamber floor 205 may be lowered by the thickness of the layer to be distributed. The first dosing blade 160A is rotated to provide a fresh pile of powder from the first powder supply module 2 to the work surface 170 along the full length of the first dosing blade 160A, ready for distribution. At step S1203, the second powder distribution sled 300B is moved in the first direction (L-R) towards the print sled 350 from the first side 170A of the work surface 170 towards the second side 170B of the work surface 170, over the first dosing blade 160A. The fourth radiation source assembly may be activated at sub-step S1203A to sinter (Sinter step 2) the parts of the layer on which the fluid was deposited during sub-step S1202B. Simultaneously, at sub-step S1203B, a layer of powder is distributed across the build area 190 by the powder distribution device 320B. Any excess powder is delivered to the second powder supply module 3, as the second powder distribution sled 300B reaches to the second side of the build bed.

The next stage B4 comprises a step S1204 of second powder distribution sled 300B movement in the second direction (R-L) and two associated sub-steps S1204A and S1204B. The build chamber floor 205 may be lowered by the thickness of the layer to be distributed and the second dosing blade 160B may be rotated to provide a fresh pile of the powder from the second powder module 3 to the work surface 170. At step S1204, the second powder distribution sled 300B is moved in the second direction (R-L) from the second side 170B of the work surface 170 towards the first side 170A of the work surface 170. Optionally, at sub-step S1204A, the powder distribution device 320B distributes a layer of powder across the build area 190. At the same time, the fourth radiation source assembly L4 may be activated at sub-step S1204B to preheat (Preheat step 3) the distributed powder. Any excess powder at the end of this pass of the second powder distribution sled 300B is conveyed to the first powder supply module 2.

The next stage B5 comprises a step S1205 of print sled 350 movement in the second direction (R-L) and three associated sub-steps S1205A, S1205B and S1205C. The print sled 350 may start the travel in the second direction (R-L) (as far across the build area 190 as the print sled 350 has travelled) back towards the second powder distribution sled 300B during the step S1204 of movement of the second powder distribution sled 300B towards the first side 170A of the work surface 170 or, if preferred, after the second powder distribution sled 300B has passed over the build area 190. During this pass of the print sled 350, the first radiation source assembly L2 may be activated at sub-step S1205A to preheat (Preheat step 4) the layer of powder distributed during sub-step S1204A, and simultaneously, the droplet deposition heads 370 may deposit a pattern of fluid onto the layer of powder at sub-step S1205B. The second radiation source assembly L3 may be activated at sub-step S1205C to sinter (Sinter step 3) the parts of the layer on which the fluid was deposited during sub-step S1205B.

The next stage B6 comprises a step S1206 of first powder distribution sled 300A movement in the second direction (R-L) and two associated sub-steps S1206A and S1206B. During the print sled 350 movement at step S1205 or, if preferred, after the print sled 350 has passed over the build area 190, the second dosing blade 160B may be rotated to provide a fresh pile of the powder from the second powder module 3 to the work surface 170. The build chamber floor 205 may be lowered by the thickness of the layer to be distributed. At step S1206, the first powder distribution sled 300A is moved in the second direction (R-L) towards the print sled 350. The third radiation source assembly L1 may be activated at sub-step S1206A to sinter (Sinter step 4) the parts of the layer on which the fluid was deposited during sub-step S1205B. Simultaneously, at sub-step S1206B, the powder distribution device 320A distributes a layer of powder across the build area 190. Any excess powder at the end of this pass of powder distribution sled 300 is conveyed to the first powder supply module 2. The process then repeats from step S1201, until the desired object is manufactured.

From the above, it will be appreciated that the processing of one layer comprises the steps of distributing powder, preheating, depositing fluid and sintering. In the above method, all these process steps may occur in the same direction of movement of the sleds which may give better thermal uniformity across the build area. The above method provides the capability of processing two layers utilising six passes of the sleds. Each layer comprises two preheat steps which may help to prevent curling of the object, two sinter steps which may improve the bonding between the two layers of powder and may further have two powder distributions per layer which may allow to form selective thicker layers as required in the object, thus rapidly manufacturing a good quality three-dimensional object having good intra- and/or inter-layer strength.

### Variant of sled layout illustrated in Figure 11 (Figure 13)

According to one embodiment, the components of the first powder distribution sled 300A and the second powder distribution sled 300B illustrated in Figure 11 may be re-arranged to provide a different sled layout. As shown in Figure 13, the first powder distribution sled 300A may comprise a powder distribution device 320A and a third radiation source assembly L1 on one side of the powder distribution device 320A, and the second powder distribution sled 300B may comprise a powder distribution device 320B and a fourth radiation source assembly L4 on one side of the powder distribution device 320B. The configuration illustrated in Figure 13 may provide the capability to distribute thicker layers. The two layers may be processed using six passes of the sleds with one or two preheat steps and one sinter step per layer.

Moreover, in the sled layout shown in Figure 11, the first powder distribution sled 300A may comprise a further radiation source assembly on the other side of the powder distribution device 320A, and the second powder distribution sled 300B may comprise a further radiation source assembly on the other side of the powder distribution device 320B.

Furthermore, an entire sled can be easily replaced with another sled to achieve a different sled layout. The individual components of a sled can also be replaced with the new components. Also, individual components may naturally deteriorate over extended use and may be replaced with new components.

### General apparatus considerations

It should be noted that even though the above sled layouts illustrate the powder distribution sled(s) and/or the print sled(s) as being parallel to each other, the one or more sleds may be arranged orthogonal to each other. In such an event, the first powder distribution sled 300A and the second powder distribution sled 300B (and their respective directions of movement) are orthogonal to each other, and the first powder supply module 2 and the second powder supply module 3 may be provided orthogonal to each other to achieve rapid processing of the manufacturing of the three dimensional object.

It should be noted that the above-described methods are for illustration only, and that other possible methods can be carried out. For example, by re-arranging the starting position of the sleds, a different method can be obtained.

It should be appreciated that the above sled layouts and methods may equally be applicable to the Figures 3A, 3B, 4A and 4B.

The above described first, second, third and fourth radiation source assemblies are electromagnetic radiation sources such as infrared radiation sources that may comprise halogen lamps, either in the form of modular sources or a full width single bulb; arrays of light-emitting diodes (LEDs); arrays of laser diodes; arrays of ceramic lamps; arrays of argon lamps; lasers or any other suitable infrared radiation emitter.

With any of the above described sled layout options and methods, a printhead cleaning station may be provided. The printhead cleaning station may be located at the opposite end of the work surface. Once the print sled 350 has reached the end of the stroke, the droplet deposition heads 370 may be cleaned before the next stroke. The droplet deposition heads 370 may be cleaned after every stroke, after every set number of strokes or in response to a printhead nozzle monitoring system.

### Controller

A controller 550 to control the sequence of distributing powder, preheating, depositing fluid and sintering will now be described. The controller 550 may be a computing device, a microprocessor, an application-specific integrated circuit, or any other suitable device to control the functions of the various components of the printer.

The controller 550 is in communication with a data store 510 supplying print data relating to slices defining the three dimensional object to be manufactured, and, for example, information on the number and thickness of build layers to be distributed for each buffer layer and object layer step.

The controller 550 may execute instructions received from the data store 510 to operate the print sled 350, 350A, 350B and the powder distribution sled 300, 300A, 300B in specified direction from first side of the build bed to the second side of the build bed in a predefined time interval. Further, the controller may execute the instructions to control a time interval between the movement of the print sled 350, 350A, 350B and the powder distribution sled 300, 300A, 300B. The controller may execute instructions to rotate the dosing blade 160A, 160B to dose a pile of powder onto the work surface 170.

The controller 550 may execute instructions to switch ON and OFF the radiation source assemblies mounted on the powder distribution sled 300, 300A, 300B and on the print sled 350, 350A, 350B. In addition, the controller 550 may receive instructions to control each the radiation source assembly for preheating and/or for sintering. Instructions may include set points for e.g. radiation wavelength and/or intensity of the radiation source assembly that the controller may use to cause the radiation source assembly to switch ON at a certain wavelength and/or intensity for a certain time period.

The controller 550 may receive instructions from the data store 510 to repeat the sequence for example, to distribute a number of buffer layers before a build.

The controller 550 may further receive instructions to instruct the droplet deposition heads 370A, 370B to deposit a pattern of fluid based on image data received from the data store with respect to the specific powder layer. The image data may define a cross section of the three-dimensional object to be manufactured, such as a product part definition contained in slices of a CAD model.

In parallel, the controller 550 may receive instructions to move the powder distribution sled or the print sled, either upon expiry of a predefined time interval or upon receiving an additional trigger signal from the temperature sensor, for example. The temperature of the build bed being monitored by the sensor may be continuously provided to the controller 550, and/or upon a predetermined trigger temperature provided to the controller 550 based on the specific powder material being used.

The controller 550 may control further advantageous steps, for example the controller 550 may receive instructions to cause the build chamber floor to be lowered after specified operations for example, before distributing a new layer.

The controller 550 may execute instructions received from the data store 510 to determine whether a next powder layer is to be formed as part of the formation of the three-dimensional object. In response to a determination that a next layer is to be formed, the controller 550 may receive instructions to continue with further powder distributing, preheating, fluid depositing and sintering sequences as described.

## Claims

1. Apparatus for manufacturing a three-dimensional object from a powder, the apparatus comprising:
a work surface (170);
a build bed (201) having a build area (190), the build area (190) being comprised within the work surface (170), wherein successive layers of said three-dimensional object are formed in the build bed (201);
a first powder supply module (2) fixedly arranged on a first side (170A) of the work surface (170), outward from a first side (201A) of the build bed (201);
a second powder supply module (3) fixedly arranged on a second side (170B) of the work surface (170), outward from a second side (201B) of the build bed (201);
a first powder distribution sled (300A) operable to distribute powder dosed to the work surface (170) from the first powder supply module (2) while moving in a first direction from the first side (170A) of the work surface (170) towards the second side (170B) of the work surface (170), and from the second powder supply module (3) while moving in a second direction from the second side (170B) of the work surface (170) towards the first side (170A) of the work surface (170), so as to form a layer of powder within the build area (190), the first powder distribution sled (300A) being driveable along a first axis across the build area (190); and
a print sled (350) operable to deposit a pattern of fluid onto the layer of powder within the build area (190) to define a cross section of said object in said layer, the print sled (350) being driveable along a second axis across the build area (190);
wherein the first axis is parallel to, or coaxial with, the second axis;
wherein the first powder distribution sled (300A) comprises a first powder distribution device (320A) for distributing the powder;
wherein the print sled (350) comprises one or more droplet deposition heads (370) for depositing the fluid, a first radiation source assembly (L2; L3) located on one side of the one or more droplet deposition heads, and a second radiation source assembly (L3; L2) located on the other side of the one or more droplet deposition heads (370); and
wherein the first powder distribution sled (300A) further comprises a third radiation source assembly (L1).

2. The apparatus according to claim 1, further comprising a second powder distribution sled (300B) operable to distribute powder dosed to the work surface (170) from the first powder supply module (2) and/or from the second powder supply module (3) and to distribute a layer of powder within the build area (190), the second powder distribution sled (300B) being driveable along a third axis across the build area (190);
wherein the first axis is parallel to, or coaxial with, the third axis.

3. The apparatus according to claim 2, wherein the second powder distribution sled (300B) comprises a second powder distribution device (320B) and a fourth radiation source assembly (L4) located on one side of the second powder distribution device (320B), wherein each of the first, second, third and fourth radiation source assemblies (L1, L2, L3, L4) is operable to both preheat and sinter powder within the build area (190).

4. The apparatus according to claim 2 or claim 3, wherein the print sled (350) is located between the first powder distribution sled (300A) and the second powder distribution sled (300B).

5. A method for manufacturing a three-dimensional object from powder using apparatus according to claim 1 to form each layer of said object;
wherein, to form each layer of said object, the method comprises driving the first powder distribution sled in first and second directions, the method further comprising the steps of:
(a) dosing powder from the first powder supply module (2) to the work surface (170) before the first powder distribution sled (300A) is driven in the first direction;
(b) dosing powder from the second powder supply module (3) to the work surface (170) before the first powder distribution sled (300A) is driven in the second direction;
(c) driving the first powder distribution sled (300A) across at least part of the build area (190);
(c1) distributing a layer of powder within the build area (190) using the first powder distribution device (320A) located on the first powder distribution sled (300A);
(d) driving the print sled (350) across at least part of the build area (190); and repeating from step (c1) to distribute a further layer of powder within the build area (190);
wherein the method further comprises preheating the layer of powder by any or all of:
(e1) activating the third radiation source assembly (L1) during step (c);
(e2) activating the first radiation source assembly (L2) during step (d); and
(e3) activating the second radiation source assembly (L3) during step (d);
wherein the method further comprises, during step (d), depositing the pattern of fluid onto the layer of powder within the build area (190) using the one or more droplet deposition heads (370); and
wherein the method further comprises sintering powder on which the fluid was deposited, by any or all of:
(f1) activating the third radiation source assembly (L1) during step (c);
(f2) activating the first radiation source assembly (L2) during step (d); and
(f3) activating the second radiation source assembly (L3) during step (d).

6. The method according to claim 5, wherein the apparatus further comprises a second powder distribution sled (300B) comprising a second powder distribution device (320B), and a fourth radiation source assembly (L4) located on one side of the second powder distribution device (300B);
wherein the method comprises driving the second powder distribution sled (300B) in third and fourth directions, the method further comprising the steps of:
(g) dosing powder from the first powder supply module (2) to the work surface (170) before the second powder distribution sled (300B) is driven in the third direction;
(h) dosing powder from the second powder supply module (3) to the work surface (170) before the second powder distribution sled (300B) is driven in the fourth direction;
(i) driving the second powder distribution sled (300B) across at least part of the build area (190);
(i1) distributing a layer of powder using the second powder distribution device (320B) located on the second powder distribution sled (300B); and
(j) during step (i), preheating and/or sintering using the fourth radiation source assembly (L4).

7. The method according to claim 5 or claim 6, wherein the method includes two consecutive distribution steps per layer of powder.

8. Apparatus for manufacturing a three-dimensional object from a powder, the apparatus comprising:
a work surface (170);
a build bed (201) having a build area (190), the build area (190) being comprised within the work surface (170), wherein successive layers of said three-dimensional object are formed in the build bed (201);
a first powder supply module (2) fixedly arranged on a first side (170A) of the work surface (170), outward from a first side (201A) of the build bed (201);
a second powder supply module (3) fixedly arranged on a second side (170B) of the work surface (170), outward from a second side (201B) of the build bed (201);
a powder distribution sled (300) operable to distribute powder dosed to the work surface (170) from the first powder supply module (2) while moving in a first direction from the first side (170A) of the work surface (170) towards the second side (170B) of the work surface (170), and from the second powder supply module (3) while moving in a second direction from the second side (170B) of the work surface (170) towards the first side (170A) of the work surface (170), so as to form a layer of powder within the build area (190), the powder distribution sled (300) being driveable along a first axis across the build area (190); and
a first print sled (350A) operable to deposit a pattern of fluid onto the layer of powder within the build area (190) to define a cross section of said object in said layer, the first print sled (350A) being driveable along a second axis across the build area (190);
wherein the first axis is parallel to, or coaxial with, the second axis;
wherein the powder distribution sled (300) comprises a powder distribution device (320), a first radiation source assembly (L2; L3) and a second radiation source assembly (L3; L2);
wherein the first print sled (350A) comprises one or more droplet deposition heads (370A) and a third radiation source assembly (L1) located on one side of the one or more droplet deposition heads (370A), in a first direction relative to the one or more droplet deposition heads (370A); and
wherein the first print sled (350A) is positioned in a second direction, opposite to the first direction, relative to the powder distribution sled (300).

9. The apparatus according to claim 8, further comprising a second print sled (350B) operable to deposit a pattern of fluid onto the layer of powder within the build area (190), the second print sled (350B) being driveable along a third axis across the build area (190);
wherein the second print sled (350B) comprises one or more droplet deposition heads (370B) and a fourth radiation source assembly (L4) located on one side of the one or more droplet deposition heads (370B).

10. The apparatus according to claim 9, wherein each of the first, second, third and fourth radiation source assemblies (L1, L2, L3, L4) is operable to both preheat and sinter powder within the build area (190).

11. A method for manufacturing a three-dimensional object from a powder using apparatus according to claim 8 to form each layer of said object;
wherein, to form each layer of said object, the method comprises driving the powder distribution sled (300) in first and second directions, the method further comprising the steps of:
(a) dosing powder from the first powder supply module (2) to the work surface (170) before the powder distribution sled (300) is driven in the first direction;
(b) dosing powder from the second powder supply module (3) to the work surface (170) before the powder distribution sled (300) is driven in the second direction;
(c) driving the powder distribution sled (300) across at least part of the build area (190); (c1) distributing a layer of powder within the build area (190) using the powder distribution device (320) located on the powder distribution sled (300);
(d) driving the first print sled (350A) across at least part of the build area (190); and repeating from step (c1) to distribute a further layer of powder within the build area (190);
wherein the method further comprises preheating the layer of powder by any or all of:
(e1) activating the third radiation source assembly (L1) during step (d);
(e2) activating the first radiation source assembly during (L2) step (c); and
(e3) activating the second radiation source assembly (L3) during step (c);
wherein the method further comprises, during step (d), depositing a pattern of fluid onto the layer of powder within the build area (190) using the one or more droplet deposition heads (370A); and
wherein the method further comprises sintering powder on which the fluid was deposited, by any or all of:
(f1) activating the third radiation source assembly (L1) during step (d);
(f2) activating the first radiation source assembly (L2) during step (c); and
(f3) activating the second radiation source assembly (L3) during step (c).

12. The method according to claim 11, wherein the apparatus further comprises a second print sled (350B) comprising one or more droplet deposition heads (370B), and a fourth radiation source assembly (L4) located on one side of the one or more droplet deposition heads (370B);
wherein the method comprises driving the second print sled (350B) in third and fourth directions, the method further comprising the steps of:
(g) driving the second print sled (350B) across at least part of the build area (190);
(h) depositing a pattern of fluid onto the layer of powder within the build area (190) using the one or more droplet deposition heads (370B); and
(i) during step (g), preheating and/or sintering by activating the fourth radiation source assembly (L4).

13. The method according to claim 11 or claim 12, wherein the method includes at least two preheat steps, two consecutive print steps or two sinter steps per layer of powder.

## Patentansprüche

1. Vorrichtung zur Herstellung eines dreidimensionalen Objekts aus einem Pulver, wobei die Vorrichtung umfasst:
eine Arbeitsfläche (170);
ein Baubett (201) mit einem Baubereich (190), wobei der Baubereich (190) innerhalb der Arbeitsfläche (170) enthalten ist, wobei aufeinanderfolgende Schichten des dreidimensionalen Objekts in dem Baubett (201) gebildet werden;
ein erstes Pulverzufuhrmodul (2), das außerhalb einer ersten Seite (201A) des Baubetts (201) fest auf einer ersten Seite (170A) der Arbeitsfläche (170) eingerichtet ist;
ein zweites Pulverzufuhrmodul (3), das fest auf einer zweiten Seite (170B) der Arbeitsfläche (170), von einer zweiten Seite (201B) des Baubetts (201) nach außen, eingerichtet ist;
einen ersten Pulververteilungsschlitten (300A), der dazu betreibbar ist, das von dem ersten Pulverzufuhrmodul(2) zu der Arbeitsfläche (170) dosierte Pulver zu verteilen während er sich in einer ersten Richtung von der ersten Seite (170A) der Arbeitsfläche (170) zu der zweiten Seite (170B) der Arbeitsfläche (170) bewegt, und das von dem zweiten Pulverzufuhrmodul (3) zu der Arbeitsfläche (170) dosierte Pulver zu verteilen während er sich in einer zweiten Richtung von der zweiten Seite (170B) der Arbeitsfläche (170) zu der ersten Seite (170A) der Arbeitsfläche (170) bewegt, um eine Pulverschicht innerhalb des Baubereichs (190) zu bilden, wobei der erste Pulververteilungsschlitten (300A) entlang einer ersten Achse über den Baubereich (190) fahrbar ist; und
einen Druckschlitten (350), der dazu betreibbar ist, ein Fluidmuster auf die Pulverschicht innerhalb des Baubereichs (190) abzuscheiden, um einen Querschnitt des Objekts in der Schicht zu definieren, wobei der Druckschlitten (350) entlang einer zweiten Achse über den Baubereich (190) fahrbar ist;
wobei die erste Achse parallel zu oder koaxial mit der zweiten Achse ist;
wobei der erste Pulververteilungsschlitten (300A) eine erste Pulververteilungsvorrichtung (320A) zum Verteilen des Pulvers umfasst;
wobei der Druckschlitten (350) einen oder mehrere Tröpfchenabscheidungsköpfe (370) zum Abscheiden des Fluids, eine erste Strahlungsquellenanordnung (L2; L3), die sich auf einer Seite des einen oder der mehreren Tröpfchenabscheidungsköpfe befindet, und eine zweite Strahlungsquellenanordnung (L3; L2), die sich auf der anderen Seite des einen oder der mehreren Tröpfchenabscheidungsköpfe (370) befindet, umfasst; und
wobei der erste Pulververteilungsschlitten (300A) weiterhin eine dritte Strahlungsquellenanordnung (L1) umfasst.

2. Vorrichtung nach Anspruch 1, weiterhin umfassend einen zweiten Pulververteilungsschlitten (300B), der dazu betreibbar ist, das von dem ersten Pulverzufuhrmodul (2) und/oder von dem zweiten Pulverzufuhrmodul (3) zu der Arbeitsfläche (170) dosierte Pulver zu verteilen, und eine Pulverschicht innerhalb des Baubereichs (190) zu bilden, wobei der zweite Pulververteilungsschlitten (300B) entlang einer dritten Achse über den Baubereich (190) fahrbar ist;
wobei die erste Achse parallel zu oder koaxial mit der dritten Achse ist.

3. Vorrichtung nach Anspruch 2, wobei der zweite Pulververteilungsschlitten (300B) eine zweite Pulververteilungsvorrichtung (320B) und eine vierte Strahlungsquellenanordnung (L4), die sich auf einer Seite der zweiten Pulververteilungsvorrichtung (320B) befindet, umfasst, wobei jede der ersten, der zweiten, der dritten und der vierten Strahlungsquellenanordnung (L1, L2, L3, L4) dazu betreibbar ist, Pulver innerhalb des Baubereichs (190) sowohl vorzuerhitzen als auch zu sintern.

4. Vorrichtung nach Anspruch 2 oder Anspruch 3, wobei der Druckschlitten (350) sich zwischen dem ersten Pulververteilungsschlitten (300A) und dem zweiten Pulververteilungsschlitten (300B) befindet.

5. Verfahren zur Herstellung eines dreidimensionalen Objekts aus einem Pulver unter Verwendung einer Vorrichtung nach Anspruch 1 zum Bilden jeder Schicht des Objekts;
wobei das Verfahren zum Bilden jeder Schicht des Objekts ein Überführen des ersten Pulververteilungsschlittens in eine erste und eine zweite Richtung umfasst, wobei das Verfahren weiterhin die Schritte umfasst:
(a) Dosieren von Pulver von dem ersten Pulverzufuhrmodul (2) zu der Arbeitsfläche (170), bevor der erste Pulververteilungsschlitten (300A) in die erste Richtung überführt wird;
(b) Dosieren von Pulver von dem zweiten Pulverzufuhrmodul (3) zu der Arbeitsfläche (170), bevor der erste Pulververteilungsschlitten (300A) in die zweite Richtung überführt wird;
(c) Überführen des ersten Pulververteilungsschlittens (300A) über mindestens einen Teil des Baubereichs (190); (c1) Verteilen einer Pulverschicht innerhalb des Baubereichs (190) unter Verwendung der ersten Pulververteilungsvorrichtung (320A), die sich auf dem ersten Pulververteilungsschlitten (300A) befindet;
(d) Überführen des Druckschlittens (350) über mindestens einen Teil des Baubereichs (190); und Wiederholen ab Schritt (c1) zum Verteilen einer weiteren Pulverschicht innerhalb des Baubereichs (190);
wobei das Verfahren weiterhin ein Vorerhitzen der Pulverschicht durch beliebige oder alle der Folgenden umfasst:
(e1) Aktivieren der dritten Strahlungsquellenanordnung (L1) während Schritt (c);
(e2) Aktivieren der ersten Strahlungsquellenanordnung (L2) während Schritt (d); und
(e3) Aktivieren der zweiten Strahlungsquellenanordnung (L3) während Schritt (d);
wobei das Verfahren weiterhin während Schritt (d) ein Abscheiden des Fluidmusters auf die Pulverschicht innerhalb des Baubereichs (190) unter Verwendung des einen oder der mehreren Tröpfchenabscheidungsköpfe (370) umfasst; und
wobei das Verfahren weiterhin ein Sintern von Pulver, auf dem das Fluid abgeschieden wurde, durch beliebige oder alle der Folgenden umfasst:
(f1) Aktivieren der dritten Strahlungsquellenanordnung (L1) während Schritt (c);
(f2) Aktivieren der ersten Strahlungsquellenanordnung (L2) während Schritt (d); und
(f3) Aktivieren der zweiten Strahlungsquellenanordnung (L3) während Schritt (d).

6. Verfahren nach Anspruch 5, wobei die Vorrichtung weiterhin einen zweiten Pulververteilungsschlitten (300B), der eine zweite Pulververteilungsvorrichtung (320B) umfasst, und eine vierte Strahlungsquellenanordnung (L4), die sich auf einer Seite der zweiten Pulververteilungsvorrichtung (300B) befindet, umfasst;
wobei das Verfahren ein Überführen des zweiten Pulververteilungsschlittens (300B) in eine dritte und eine vierte Richtung umfasst, wobei das Verfahren weiterhin die Schritte umfasst:
(g) Dosieren von Pulver von dem ersten Pulverzufuhrmodul (2) zu der Arbeitsfläche (170), bevor der zweite Pulververteilungsschlitten (300B) in die dritte Richtung überführt wird;
(h) Dosieren von Pulver von dem zweiten Pulverzufuhrmodul (3) zu der Arbeitsfläche (170), bevor der zweite Pulververteilungsschlitten (300B) in die vierte Richtung überführt wird;
(i) Überführen des zweiten Pulververteilungsschlittens (300B) über mindestens einen Teil des Baubereichs (190);
(i1) Verteilen einer Pulverschicht unter Verwendung der zweiten Pulververteilungsvorrichtung (320B), die sich auf dem zweiten Pulververteilungsschlitten (300B) befindet; und
(j) Vorerhitzen und/oder Sintern während Schritt (i) unter Verwendung der vierten Strahlungsquellenanordnung (L4) .

7. Verfahren nach Anspruch 5 oder Anspruch 6, wobei das Verfahren zwei aufeinanderfolgende Verteilungsschritte pro Pulverschicht beinhaltet.

8. Vorrichtung zur Herstellung eines dreidimensionalen Objekts aus einem Pulver, wobei die Vorrichtung umfasst:
eine Arbeitsfläche (170);
ein Baubett (201) mit einem Baubereich (190), wobei der Baubereich (190) innerhalb der Arbeitsfläche (170) enthalten ist, wobei aufeinanderfolgende Schichten des dreidimensionalen Objekts in dem Baubett (201) gebildet werden;
ein erstes Pulverzufuhrmodul (2), das außerhalb einer ersten Seite (201A) des Baubetts (201) fest auf einer ersten Seite (170A) der Arbeitsfläche (170) eingerichtet ist;
ein zweites Pulverzufuhrmodul (3), das außerhalb einer zweiten Seite (201B) des Baubetts (201) fest auf einer zweiten Seite (170B) der Arbeitsfläche (170) von eingerichtet ist;
einen Pulververteilungsschlitten (300), der dazu betreibbar ist, das von dem ersten Pulverzufuhrmodul (2) zu der Arbeitsfläche (170) dosierte Pulver zu verteilen während er sich in einer ersten Richtung von der ersten Seite (170A) der Arbeitsfläche (170) zu der zweiten Seite (170B) der Arbeitsfläche (170) bewegt, und das von dem zweiten Pulverzufuhrmodul (3) zu der Arbeitsfläche (170) dosierte Pulver zu verteilen während er sich in einer zweiten Richtung von der zweiten Seite (170B) der Arbeitsfläche (170) zu der ersten Seite (170A) der Arbeitsfläche (170) bewegt, um eine Pulverschicht innerhalb des Baubereichs (190) zu bilden, wobei der Pulververteilungsschlitten (300) entlang einer ersten Achse über den Baubereich (190) fahrbar ist; und
einen ersten Druckschlitten (350A), der dazu betreibbar ist, ein Fluidmuster auf die Pulverschicht innerhalb des Baubereichs (190) abzuscheiden, um einen Querschnitt des Objekts in der Schicht zu definieren, wobei der erste Druckschlitten (350A) entlang einer zweiten Achse über den Baubereich (190) fahrbar ist;
wobei die erste Achse parallel zu oder koaxial mit der zweiten Achse ist;
wobei der Pulververteilungsschlitten (300) eine Pulververteilungsvorrichtung (320), eine erste Strahlungsquellenanordnung (L2; L3) und eine zweite Strahlungsquellenanordnung (L3; L2) umfasst;
wobei der erste Druckschlitten (350A) einen oder mehrere Tröpfchenabscheidungsköpfe (370A) und eine dritte Strahlungsquellenanordnung (L1), die sich auf einer Seite des einen oder der mehreren Tröpfchenabscheidungsköpfe (370A) in einer ersten Richtung in Bezug auf den einen oder die mehreren Tröpfchenabscheidungsköpfe (370A) befindet, umfasst; und
wobei der erste Druckschlitten (350A) in einer zweiten Richtung, die entgegengesetzt zu der ersten Richtung ist, in Bezug auf den Pulververteilungsschlitten (300) positioniert ist.

9. Vorrichtung nach Anspruch 8, weiterhin umfassend einen zweiten Druckschlitten (350B), der dazu betreibbar ist, ein Fluidmuster auf die Pulverschicht innerhalb des Baubereichs (190) abzuscheiden, wobei der zweite Druckschlitten (350B) entlang einer dritten Achse über den Baubereich (190) fahrbar ist;
wobei der zweite Druckschlitten (350B) einen oder mehrere Tröpfchenabscheidungsköpfe (370B) und eine vierte Strahlungsquellenanordnung (L4), die sich auf einer Seite des einen oder der mehreren Tröpfchenabscheidungsköpfe (370B) befindet, umfasst.

10. Vorrichtung nach Anspruch 9, wobei jede der ersten, der zweiten, der dritten und der vierten Strahlungsquellenanordnungen (L1, L2, L3, L4) betreibbar ist, um Pulver innerhalb des Baubereichs (190) sowohl vorzuerhitzen als auch zu sintern.

11. Verfahren zur Herstellung eines dreidimensionalen Objekts aus einem Pulver unter Verwendung einer Vorrichtung nach Anspruch 8 zum Bilden jeder Schicht des Objekts;
wobei das Verfahren zum Bilden jeder Schicht des Objekts ein Überführen des Pulververteilungsschlittens (300) in eine erste und eine zweite Richtung umfasst, wobei das Verfahren weiterhin die Schritte umfasst:
(a) Dosieren von Pulver von dem ersten Pulverzufuhrmodul (2) zu der Arbeitsfläche (170), bevor der Pulververteilungsschlitten (300) in die erste Richtung überführt wird;
(b) Dosieren von Pulver von dem zweiten Pulverzufuhrmodul (3) zu der Arbeitsfläche (170), bevor der Pulververteilungsschlitten (300) in die zweite Richtung überführt wird;
(c) Überführen des Pulververteilungsschlittens (300) über mindestens einen Teil des Baubereichs (190);
(c1) Verteilen einer Pulverschicht innerhalb des Baubereichs (190) unter Verwendung der Pulververteilungsvorrichtung (320), die sich auf dem Pulververteilungsschlitten (300) befindet;
(d) Überführen des ersten Druckschlittens (350A) über mindestens einen Teil des Baubereichs (190); und Wiederholen von Schritt (c1) zum Verteilen einer weiteren Pulverschicht innerhalb des Baubereichs (190);
wobei das Verfahren weiterhin ein Vorerhitzen der Pulverschicht durch beliebige oder alle der Folgenden umfasst:
(e1) Aktivieren der dritten Strahlungsquellenanordnung (L1) während Schritt (d);
(e2) Aktivieren der ersten Strahlungsquellenanordnung (L2) während Schritt (c); und
(e3) Aktivieren der zweiten Strahlungsquellenanordnung (L3) während Schritt (c);
wobei das Verfahren weiterhin während Schritt (d) ein Abscheiden eines Fluidmusters auf die Pulverschicht innerhalb des Baubereichs (190) unter Verwendung des einen oder der mehreren Tröpfchenabscheidungsköpfe (370A) umfasst; und
wobei das Verfahren weiterhin ein Sintern von Pulver, auf dem das Fluid abgeschieden wurde, durch beliebige oder alle der Folgenden umfasst:
(f1) Aktivieren der dritten Strahlungsquellenanordnung (L1) während Schritt (d);
(f2) Aktivieren der ersten Strahlungsquellenanordnung (L2) während Schritt (c); und
(f3) Aktivieren der zweiten Strahlungsquellenanordnung (L3) während Schritt (c).

12. Verfahren nach Anspruch 11, wobei die Vorrichtung weiterhin einen zweiten Druckschlitten (350B), der einen oder mehrere Tröpfchenabscheidungsköpfe (370B) umfasst, und eine vierte Strahlungsquellenanordnung (L4), die sich auf einer Seite des einen oder der mehreren Tröpfchenabscheidungsköpfe (370B) befindet, umfasst;
wobei das Verfahren ein Überführen des zweiten Druckschlittens (350B) in eine dritte und eine vierte Richtung umfasst, wobei das Verfahren weiterhin die Schritte umfasst:
(g) Überführen des zweiten Druckschlittens (350B) über mindestens einen Teil des Baubereichs (190);
(h) Abscheiden eines Fluidmusters auf die Pulverschicht innerhalb des Baubereichs (190) unter Verwendung des einen oder der mehreren Tröpfchenabscheidungsköpfe (370B); und
(i) Vorerhitzen und/oder Sintern während Schritt (g) durch Aktivieren der vierten Strahlungsquellenanordnung (L4) .

13. Verfahren nach Anspruch 11 oder Anspruch 12, wobei das Verfahren mindestens zwei Vorerhitzungsschritte, zwei aufeinanderfolgende Druckschritte oder zwei Sinterschritte pro Pulverschicht beinhaltet.

## Revendications

1. Appareil destiné à fabriquer un objet tridimensionnel à partir d'une poudre, l'appareil comprenant :
une surface de travail (170) ;
un lit de construction (201) ayant une zone de construction (190), la zone de construction (190) étant comprise au sein de la surface de travail (170), dans lequel des couches successives dudit objet tridimensionnel sont formées dans le lit de construction (201) ;
un premier module d'alimentation en poudre (2) agencé fixement sur un premier côté (170A) de la surface de travail (170), vers l'extérieur depuis un premier côté (201A) du lit de construction (201) ;
un deuxième module d'alimentation en poudre (3) agencé fixement sur un deuxième côté (170B) de la surface de travail (170), vers l'extérieur depuis un deuxième côté (201B) du lit de construction (201) ;
un premier traîneau de distribution de poudre (300A) capable de fonctionner pour distribuer de la poudre dosée à la surface de travail (170) depuis le premier module d'alimentation en poudre (2) tout en se déplaçant dans une première direction du premier côté (170A) de la surface de travail (170) vers le deuxième côté (170B) de la surface de travail (170), et depuis le deuxième module d'alimentation en poudre (3) tout en se déplaçant dans une deuxième direction du deuxième côté (170B) de la surface de travail (170) vers le premier côté (170A) de la surface de travail (170), de manière à former une couche de poudre au sein de la zone de construction (190), le premier traîneau de distribution de poudre (300A) étant capable d'être entraîné le long d'un premier axe en travers de la zone de construction (190) ; et
un traîneau d'impression (350) capable de fonctionner pour déposer un motif de fluide sur la couche de poudre au sein de la zone de construction (190) pour définir une section transversale dudit objet dans ladite couche, le traîneau d'impression (350) étant capable d'être entraîné le long d'un deuxième axe en travers de la zone de construction (190) ;
dans lequel le premier axe est parallèle à, ou coaxial avec, le deuxième axe ;
dans lequel le premier traîneau de distribution de poudre (300A) comprend un premier dispositif de distribution de poudre (320A) destiné à distribuer la poudre ;
dans lequel le traîneau d'impression (350) comprend une ou plusieurs têtes de dépôt de gouttelettes (370) destinées à déposer le fluide, un premier ensemble de source de rayonnement (L2 ; L3) situé sur un côté des une ou plusieurs têtes de dépôt de gouttelettes, et un deuxième ensemble de source de rayonnement (L3; L2) situé sur l'autre côté des une ou plusieurs têtes de dépôt de gouttelettes (370) ; et
dans lequel le premier traîneau de distribution de poudre (300A) comprend en outre un troisième ensemble de source de rayonnement (L1).

2. Appareil selon la revendication 1, comprenant en outre un deuxième traîneau de distribution de poudre (300B) capable de fonctionner pour distribuer de la poudre dosée à la surface de travail (170) depuis le premier module d'alimentation en poudre (2) et/ou depuis le deuxième module d'alimentation en poudre (3) et pour distribuer une couche de poudre au sein de la zone de construction (190), le deuxième traîneau de distribution de poudre (300B) étant capable d'être entraîné le long d'un troisième axe en travers de la zone de construction (190) ;
dans lequel le premier axe est parallèle à, ou coaxial avec, le troisième axe.

3. Appareil selon la revendication 2, dans lequel le deuxième traîneau de distribution de poudre (300B) comprend un deuxième dispositif de distribution de poudre (320B) et un quatrième ensemble de source de rayonnement (L4) situé sur un côté du deuxième dispositif de distribution de poudre (320B), dans lequel chacun des premier, deuxième, troisième et quatrième ensembles de source de rayonnement (L1, L2, L3, L4) est capable de fonctionner tant pour préchauffer que fritter de la poudre au sein de la zone de construction (190).

4. Appareil selon la revendication 2 ou la revendication 3, dans lequel le traîneau d'impression (350) est situé entre le premier traîneau de distribution de poudre (300A) et le deuxième traîneau de distribution de poudre (300B).

5. Procédé destiné à fabriquer un objet tridimensionnel à partir d'une poudre en utilisant un appareil selon la revendication 1 pour former chaque couche dudit objet ;
dans lequel, pour former chaque couche dudit objet, le procédé comprend l'entraînement du premier traîneau de distribution de poudre dans des première et deuxième directions, le procédé comprenant en outre les étapes suivantes :
(a) le dosage de poudre du premier module d'alimentation en poudre (2) à la surface de travail (170) avant l'entraînement du premier traîneau de distribution de poudre (300A) dans la première direction ;
(b) le dosage de poudre du deuxième module d'alimentation en poudre (3) à la surface de travail (170) avant l'entraînement du premier traîneau de distribution de poudre (300A) dans la deuxième direction ;
(c) l'entraînement du premier traîneau de distribution de poudre (300A) en travers d'au moins une partie de la zone de construction (190) ;
(c1) la distribution d'une couche de poudre au sein de la zone de construction (190) en utilisant le premier dispositif de distribution de poudre (320A) situé sur le premier traîneau de distribution de poudre (300A) ;
(d) l'entraînement du traîneau d'impression (350) en travers d'au moins une partie de la zone de construction (190) ; et
la répétition de l'étape (c1) pour distribuer une couche de poudre supplémentaire au sein de la zone de construction (190) ;
dans lequel le procédé comprend en outre le préchauffage de la couche de poudre par l'une quelconque ou l'ensemble des activations suivantes :
(e1) l'activation du troisième ensemble de source de rayonnement (L1) pendant l'étape (c) ;
(e2) l'activation du premier ensemble de source de rayonnement (L2) pendant l'étape (d) ; et
(e3) l'activation du deuxième ensemble de source de rayonnement (L3) pendant l'étape (d) ;
dans lequel le procédé comprend en outre, pendant l'étape (d), le dépôt du motif de fluide sur la couche de poudre au sein de la zone de construction (190) en utilisant les une ou plusieurs têtes de dépôt de gouttelettes (370) ; et
dans lequel le procédé comprend en outre le frittage de la poudre sur laquelle le fluide a été déposé, par l'une quelconque ou l'ensemble des activations suivantes :
(f1) l'activation du troisième ensemble de source de rayonnement (L1) pendant l'étape (c) ;
(f2) l'activation du premier ensemble de source de rayonnement (L2) pendant l'étape (d) ; et
(f3) l'activation du deuxième ensemble de source de rayonnement (L3) pendant l'étape (d).

6. Procédé selon la revendication 5, dans lequel l'appareil comprend en outre un deuxième traîneau de distribution de poudre (300B) comprenant un deuxième dispositif de distribution de poudre (320B), et un quatrième ensemble de source de rayonnement (L4) situé sur un côté du deuxième dispositif de distribution de poudre (300B) ;
dans lequel le procédé comprend l'entraînement du deuxième traîneau de distribution de poudre (300B) dans les troisième et quatrième directions, le procédé comprenant en outre les étapes suivantes :
(g) le dosage de poudre du premier module d'alimentation en poudre (2) à la surface de travail (170) avant l'entraînement du deuxième traîneau de distribution de poudre (300B) dans la troisième direction ;
(h) le dosage de poudre du deuxième module d'alimentation en poudre (3) à la surface de travail (170) avant l'entraînement du deuxième traîneau de distribution de poudre (300B) dans la quatrième direction ;
(i) l'entraînement du deuxième traîneau de distribution de poudre (300B) en travers d'au moins une partie de la zone de construction (190) ;
(i1) la distribution d'une couche de poudre en utilisant le deuxième dispositif de distribution de poudre (320B) situé sur le deuxième traîneau de distribution de poudre (300B) ; et
(j) pendant l'étape (i), le préchauffage et/ou le frittage en utilisant le quatrième ensemble de source de rayonnement (L4).

7. Procédé selon la revendication 5 ou la revendication 6, dans lequel le procédé inclut deux étapes de distribution consécutives par couche de poudre.

8. Appareil destiné à fabriquer un objet tridimensionnel à partir d'une poudre, l'appareil comprenant :
une surface de travail (170) ;
un lit de construction (201) ayant une zone de construction (190), la zone de construction (190) étant comprise au sein de la surface de travail (170), dans lequel des couches successives dudit objet tridimensionnel sont formées dans le lit de construction (201) ;
un premier module d'alimentation en poudre (2) agencé fixement sur un premier côté (170A) de la surface de travail (170), vers l'extérieur depuis un premier côté (201A) du lit de construction (201) ;
un deuxième module d'alimentation en poudre (3) agencé fixement sur un deuxième côté (170B) de la surface de travail (170), vers l'extérieur depuis un deuxième côté (201B) du lit de construction (201) ;
un traîneau de distribution de poudre (300A) capable de fonctionner pour distribuer de la poudre dosée à la surface de travail (170) depuis le premier module d'alimentation en poudre (2) tout en se déplaçant dans une première direction du premier côté (170A) de la surface de travail (170) vers le deuxième côté (170B) de la surface de travail (170), et depuis le deuxième module d'alimentation en poudre (3) tout en se déplaçant dans une deuxième direction du deuxième côté (170B) de la surface de travail (170) vers le premier côté (170A) de la surface de travail (170), de manière à former une couche de poudre au sein de la zone de construction (190), le traîneau de distribution de poudre (300A) étant capable d'être entraîné le long d'un premier axe en travers de la zone de construction (190) ; et
un premier traîneau d'impression (350A) capable de fonctionner pour déposer un motif de fluide sur la couche de poudre au sein de la zone de construction (190) pour définir une section transversale dudit objet dans ladite couche, le premier traîneau d'impression (350A) étant capable d'être entraîné le long d'un deuxième axe en travers de la zone de construction (190) ;
dans lequel le premier axe est parallèle à, ou coaxial avec, le deuxième axe ;
dans lequel le traîneau de distribution de poudre (300) comprend un dispositif de distribution de poudre (320), un premier ensemble de source de rayonnement (L2 ; L3) et un deuxième ensemble de source de rayonnement (L3 ; L2) ;
dans lequel le premier traîneau d'impression (350A) comprend une ou plusieurs têtes de dépôt de gouttelettes (370A) et un troisième ensemble de source de rayonnement (L1) situé sur un côté des une ou plusieurs têtes de dépôt de gouttelettes (370A), dans une première direction par rapport aux une ou plusieurs têtes de dépôt de gouttelettes (370A) ; et
dans lequel le premier traîneau d'impression (350A) est positionné dans une deuxième direction, opposée à la première direction, par rapport au traîneau de distribution de poudre (300).

9. Appareil selon la revendication 8, comprenant en outre un deuxième traîneau d'impression (350B) capable de fonctionner pour déposer un motif de fluide sur la couche de poudre au sein de la zone de construction (190), le deuxième traîneau d'impression (350B) étant capable d'être entraîné le long d'un troisième axe en travers de la zone de construction (190) ;
dans lequel le deuxième traîneau d'impression (350B) comprend une ou plusieurs têtes de dépôt de gouttelettes (370B) et un quatrième ensemble de source de rayonnement (L4) situé sur un côté des une ou plusieurs têtes de dépôt de gouttelettes (370B).

10. Appareil selon la revendication 9, dans lequel chacun des premier, deuxième, troisième et quatrième ensembles de source de rayonnement (L1, L2, L3, L4) est capable de fonctionner tant pour préchauffer que fritter de la poudre au sein de la zone de construction (190).

11. Procédé destiné à fabriquer un objet tridimensionnel à partir d'une poudre en utilisant un appareil selon la revendication 8 pour former chaque couche dudit objet ;
dans lequel, pour former chaque couche dudit objet, le procédé comprend l'entraînement du traîneau de distribution de poudre (300) dans des première et deuxième directions, le procédé comprenant en outre les étapes suivantes :
(a) le dosage de poudre du premier module d'alimentation en poudre (2) à la surface de travail (170) avant l'entraînement du traîneau de distribution de poudre (300) dans la première direction ;
(b) le dosage de poudre du deuxième module d'alimentation en poudre (3) à la surface de travail (170) avant l'entraînement du traîneau de distribution de poudre (300) dans la deuxième direction ;
(c) l'entraînement du traîneau de distribution de poudre (300) en travers d'au moins une partie de la zone de construction (190) ;
(c1) la distribution d'une couche de poudre au sein de la zone de construction (190) en utilisant le dispositif de distribution de poudre (320) situé sur le traîneau de distribution de poudre (300) ;
(d) l'entraînement du premier traîneau d'impression (350A) en travers d'au moins une partie de la zone de construction (190) ; et
la répétition de l'étape (c1) pour distribuer une couche de poudre supplémentaire au sein de la zone de construction (190) ;
dans lequel le procédé comprend en outre le préchauffage de la couche de poudre par l'une quelconque ou l'ensemble des activations suivantes :
(e1) l'activation du troisième ensemble de source de rayonnement (L1) pendant l'étape (d) ;
(e2) l'activation du premier ensemble de source de rayonnement (L2) pendant l'étape (c) ; et
(e3) l'activation du deuxième ensemble de source de rayonnement (L3) pendant l'étape (c) ;
dans lequel le procédé comprend en outre, pendant l'étape (d), le dépôt d'un motif de fluide sur la couche de poudre au sein de la zone de construction (190) en utilisant une ou plusieurs têtes de dépôt de gouttelettes (370A) ; et
dans lequel le procédé comprend en outre le frittage de la poudre sur laquelle le fluide a été déposé par l'une quelconque ou l'ensemble des activations suivantes :
(f1) l'activation du troisième ensemble de source de rayonnement (L1) pendant l'étape (d) ;
(f2) l'activation du premier ensemble de source de rayonnement (L2) pendant l'étape (c) ; et
(f3) l'activation du deuxième ensemble de source de rayonnement (L3) pendant l'étape (c).

12. Procédé selon la revendication 11, dans lequel l'appareil comprend en outre un deuxième traîneau d'impression (350B) comprenant une ou plusieurs têtes de dépôt de gouttelettes (370B), et un quatrième ensemble de source de rayonnement (L4) situé sur un côté des une ou plusieurs têtes de dépôt de gouttelettes (370B) ;
dans lequel le procédé comprend l'entraînement du deuxième traîneau d'impression (350B) dans des troisième et quatrième directions, le procédé comprenant en outre les étapes suivantes :
(g) l'entraînement du deuxième traîneau d'impression (350B) en travers d'au moins une partie de la zone de construction (190) ;
(h) le dépôt d'un motif de fluide sur la couche de poudre au sein de la zone de construction (190) en utilisant les une ou plusieurs têtes de dépôt de gouttelettes (370B) ; et
(i) pendant l'étape (g), le préchauffage et/ou le frittage en activant le quatrième ensemble de source de rayonnement (L4).

13. Procédé selon la revendication 11 ou la revendication 12, dans lequel le procédé inclut au moins deux étapes de préchauffage, deux étapes d'impression consécutives ou deux étapes de frittage par couche de poudre.
